(19) Europäisches Patentamt

European Patent Office

Office européen des brevets

(11) **EP 1 391 698 A2**

(12) **EUROPÄISCHE PATENTANMELDUNG**

(43) Veröffentlichungstag:
    **25.02.2004 Patentblatt 2004/09**

(51) Int Cl.⁷: **G01F 1/58**

(21) Anmeldenummer: **03405531.9**

(22) Anmeldetag: **14.07.2003**

(84) Benannte Vertragsstaaten:
    **AT BE BG CH CY CZ DE DK EE ES FI FR GB GR
    HU IE IT LI LU MC NL PT RO SE SI SK TR**
    Benannte Erstreckungsstaaten:
    **AL LT LV MK**

(30) Priorität: **16.08.2002 EP 02405704**

(71) Anmelder: **Levitronix LLC
    Waltham, MA 02451 (US)**

(72) Erfinder: **Schöb, Reto, Dr.
    8964 Rudolfstetten (CH)**

(74) Vertreter: **Sulzer Management AG
    Patentabteilung / 0067,
    Zürcherstrasse 12
    8401 Winterthur (CH)**

(54) **Messvorrichtung zur Bestimmung des Durchflusses eines Fluids**

(57)    Erfindungsgemäss wird somit eine Messvorrichtung (1) zur Bestimmung des Durchflusses (Q) eines Fluids (2) vorgeschlagen, die einen Hohlkörper (3) umfasst, der einen Zufluss (4) und einen Abfluss (5) für das Fluid (2) aufweist. Im Hohlkörper (3) ist ein magnetischer Probekörper (6) beweglich angeordnet, der vom Fluid (2) mit einem Arbeitsdruck beaufschlagbar ist. Die Messvorrichrung (1) umfasst weiter mindestens einen Positionssensor (7) zur Bestimmung der Position des magnetischen Probekörpers (6), einen Elektromagneten (8) zum Ausüben einer Magnetkraft auf den magnetischen Probekörper (6), sowie eine Ansteuereinrichtung (9) für den Elektromagneten (8), welche mit dem Positionssensor (7) signalverbunden ist. Dabei umfasst die Ansteuereinrichtung (9) Regelmittel (10), welche mit Hilfe eines Signals des Positionssensors (7) den Elektromagneten (8) derart ansteuern, dass der magnetische Probekörper (6) gegen den Arbeitsdruck in einer Position (X) gehalten wird. Dabei ist der magnetische Probekörper (6) so ausgestaltet und angeordnet, dass das Fluid (2) durch den Hohlkörper (3) vom Zufluss (4) zum Abfluss (5) strömen kann.

Fig.2

EP 1 391 698 A2

**Beschreibung**

Die Erfindung betrifft eine Messvorrichtung und ein Verfahren zur Bestimmung des Durchflusses eines Fluids, sowie die Verwendung der Messvorrichtung gemäss dem Oberbegriff des unabhängigen Anspruchs der jeweiligen Kategorie.

Durchflussmesssysteme zur Bestimmung des Durchflusses eines Fluids, beispielsweise durch eine Leitung oder ein Rohr, sind für verschiedene Anwendungen in unterschiedlichen Ausführungsformen bekannt. Zur Bestimmung des Durchflusses von Fluiden geringer Dichte, insbesondere von Gasen, kommen verbreitet Vorrichtungen zum Einsatz, die ein vertikales Strömungsrohr aufweisen, das von dem Gas von unten nach oben durchströmt wird und das einen Schwebekörper aufweist, der in einem Gleichgewichtszustand zwischen der auf den Schwebekörper wirkenden Schwerkraft und der nach oben wirkenden Kraft des an ihm vorbeiströmenden Gases in einer bestimmten Position gehalten wird. Die Gleichgewichtsposition des Schwebekörpers im Strömungsrohr ist dabei ein Mass für die pro Zeiteinheit durchströmende Menge an Gas. Dabei sind solche Durchflussmesssysteme häufig nur mit einer Sichtanzeige ohne Übertragungsfunktion ausgestaltet und können selbstverständlich nicht mit horizontal ausgerichtetem Strömungsrohr betrieben werden.

Andere bekannte System arbeiten mit einer Blende und einem kegelstumpfförmigen Widerstandskörper, der vor der Blende in einem Hohlraum angeordnet ist, wobei der Hohlraum eine Zufluss- und eine Abflussöffnung aufweist und von einem Fluid durchflossen wird, dessen Durchfluss bestimmt werden soll. Dabei wird die Durchflussgeschwindigkeit des Fluids aus der Differenz der Drücke, die vor und hinter der Blende gemessen werden und der Position des Widerstandskörpers ermittelt. Die Grösse der Durchströmöffnung der Blende ist variabel, so dass die Druckdifferenz, die über die Blende abfällt, mittels einer Regeleinrichtung konstant gehalten werden kann.

Bekannt sind darüber hinaus Durchflussmesssysteme, bei welchen ein beweglich angeordneter Messkörper von einer Druckdifferenz eines durch einen Hohlkörper strömenden Fluids beaufschlagt wird. Dabei wird auf den Messkörper derart eine Kraft ausgeübt, dass der Messkörper unabhängig vom Durchfluss des Fluids in einer fest vorgegebenen Nullstellung stabilisiert wird. In der EP 0 101 815 A1 ist ein Durchflussmesssystem mit einem Venturirohr und einer Messeinrichtung gezeigt, die einen mit dem Venturirohr verbundenen, in einem Hohlzylinder beweglich gelagerten magnetischen Messkörper umfasst. Der Messkörper wird mit einer von einem durch das Venturirohr strömenden Fluid aufgebauten Druckdifferenz beaufschlagt und erfährt dadurch eine auslenkende Kraft. Der Messkörper ist dabei bevorzugt ein frei beweglicher, permanent magnetischer Kolben, dem als Stellungsgeber eine Lichtschranke zugeordnet ist. Dabei wird der Messkörper durch eine stellungsabhängige magnetische Rückstellkraft, die von einem Elektromagneten erzeugt wird, mit Hilfe einer Regeleinrichtung, die zur Bestimmung der Position des Messkörpers mit dem Stellungsgeber zusammenwirkt, in einer Nullage stabilisiert.

Diese Anordnung weist jedoch eine Reihe von Nachteilen auf. Zur Realisierung einer stabilen Nullage des Messkörpers muss die magnetische Rückstellkraft bei dem in der EP 0 101 815 A1 offenbarten Durchflussmesssystem durch eine zweite entgegengesetzt wirkende Gegenkraft zumindest teilweise kompensiert werden. Diese Gegenkraft kann beispielsweise die Gewichtskraft des Messkörpers sein. Dazu wird die Messeinrichtung so angeordnet, dass der Messkörper sich vertikal bewegen kann und nach oben in die Spule teilweise hineingezogen wird. Die stabile Nullage, das heisst die Lage des Messkörpers ohne Fluss des Fluids durch das Venturirohr, ist dann dort, wo die Magnetkraft auf den Messkörper entgegengesetzt gleich der Gewichtskraft des Messkörper ist. Das heisst, diese Anordnung kann nicht bei horizontaler Lage des Hohlzylinders, in welchem der Messkörper angeordnet ist, betrieben werden. Wird durch geeignete Wahl der mittleren Dichte des Messkörpers dessen Gewichtskraft entgegengesetzt gleich den Auftriebskräften im Fluid eingestellt, kann die Anordnung zwar unabhängig von der Lage des Hohlzylinders betrieben werden, allerdings muss zur Stabilisierung der Nullage die notwendige Gegenkraft durch einen zusätzlichen Elektromagneten erzeugt werden. Damit wird die Anordnung deutlich aufwendiger, da nicht nur ein zusätzlicher Elektromagnet, sondern auch die dafür notwendigen Regeleinrichtungen installiert werden müssen. Dabei ist diese Anordnung durch die Verwendung eines Venturirohrs mit separater Messeinrichtung grundsätzlich in seinem Aufbau relativ aufwendig. Der Messkörper, der zur Messung des Durchflusses des Fluids von der Druckdifferenz des Venturirohr beaufschlagt wird, muss in einem Hohlzylinder getrennt vom Venturirohr angeordnet werden. Das hat zur Folge, dass die Messeinrichtung durch zusätzliche Verbindungsmittel, zum Beispiel durch Druckleitungen, mit dem Venturirohr verbunden werden muss. Darüber hinaus liefert dieses Durchflussmesssystem nur dann zuverlässige Messergebnisse, wenn der Durchfluss des Fluids durch das Venturirohr dem Ausgangssignal der Regeleinrichtung proportional ist, das heisst nur dann, wenn gemäss der Bernoullischen Gleichung die Differenzdruck im Venturirohr proportional zum Quadrat des Durchflusses des Fluids ist. Dieser einfache Zusammenhang ist jedoch nur selten gegeben und in der Praxis treten häufig weitaus kompliziertere Zusammenhänge zwischen Durchfluss des Fluids und der anfallenden Druckdifferenz auf. Insbesondere hängt in der Regel die im Venturirohr anfallende Druckdifferenz von verschiedenen Parametern der Flüssigkeit, wie beispielsweise von der Viskosität oder der Dichte ab, so dass der konkrete funktionale Zusammenhang zwischen Durchfluss und Druckdifferenz unter anderem auch von der Art der zu messenden Flüsssigkeit abhängen kann.

Die Aufgabe der Erfindung ist es daher, eine verbesserte Messvorrichtung zur Bestimmung des Durchflusses eines Fluids vorzuschlagen, bei welcher die aus dem Stand der Technik bekannten Nachteile vermieden werden. Die diese Aufgabe in apparativer und verfahrenstechnischer Hinsicht lösenden Gegenstände der Erfindung sind durch die Merkmale des unabhängigen Anspruchs der jeweiligen Kategorie gekennzeichnet.

Die abhängigen Ansprüche beziehen sich auf besonders vorteilhafte Ausführungsformen der Erfindung.

Erfindungsgemäss wird somit eine Messvorrichtung zur Bestimmung des Durchflusses eines Fluids vorgeschlagen, die einen Hohlkörper umfasst, der einen Zufluss und einen Abfluss für das Fluid aufweist. Im Hohlkörper ist ein magnetischer Probekörper beweglich angeordnet, der vom Fluid mit einem Arbeitsdruck beaufschlagbar ist. Die Messvorrichtung umfasst weiter mindestens einen Positionssensor zur Bestimmung der Position des magnetischen Probekörpers, einen Elektromagneten zum Ausüben einer Magnetkraft auf den magnetischen Probekörper, sowie eine Ansteuereinrichtung für den Elektromagneten, welche mit dem Positionssensor signalverbunden ist. Dabei umfasst die Ansteuereinrichtung Regelmittel, welche mit Hilfe eines Signals des Positionssensors den Elektromagneten derart ansteuern, dass der magnetische Probekörper gegen den Arbeitsdruck in einer Position gehalten wird. Der Probekörper ist so ausgestaltet und angeordnet, dass das Fluid durch den Hohlkörper vom Zufluss zum Abfluss strömen kann.

In einer bevorzugten Ausführungsform der erfindungsgemässen Messvorrichtung ist der magnetische Probekörper in Bezug auf den Elektromagneten im Hohlkörper so angeordnet ist, dass eine stabile Nulllage des Probekörpers allein durch den Elektromagneten realisiert werden kann, der durch Ausübung einer magnetischen Kraft auf den Probekörper diesen gegen den Arbeitsdruck des strömenden Fluids in einer vorgebbaren Position halten kann. Das heisst, zur Stabilisierung des Probekörpers in der Nulllage, also in derjenigen Position, die der Probekörper ohne Fluss des Fluids durch den Hohlkörper einnimmt, ist keine zweite, zur Magnetkraft des Elektromagneten entgegengesetzt wirkende Kraft notwendig, wie beispielsweise die Gewichtskraft des Probekörpers oder eine zweite Magnetkraft. Das kann dadurch erreicht, dass der magnetische Probekörper in der Nulllage in axialer Richtung bezüglich dem Feldlinienverlauf des Elektromagneten entsprechend orientiert und symmetrisch angeordnet ist. Dadurch wirkt auf den Probekörper unabhängig von der Richtung einer axialen Auslenkung immer eine rücktreibende Kraft in Richtung zur Nulllage.

Erfindungsgemäss wird der Durchfluss durch den Hohlkörper dadurch bestimmt, dass der magnetische Probekörper gegen den Arbeitsdruck durch die Magnetkraft des Elektromagneten in einer Position gehalten wird. Dabei kann der Elektomagnet derat mit dem Probekörper zusammenwirken, dass im Betriebszustand bei einer Änderung des Durchflusses keine wesentlichen Bewegungen des Probekörpers in Bezug auf den Hohlkörper stattfinden. Das ist insbesondere von Vorteil, wenn beispielsweise der Durchfluss einer Flüssigkeit, die zu Partikelbildung neigt, oder der Durchfluss einer aggressiven Flüssigkeit, wie beispielsweise einer Polierflüssigkeit bestimmt werden soll. Da der Probekörper in Bezug auf den Hohlkörper sich nur in geringem Masse bewegt, wird ein Verschleiss durch Reibungseffekte minimiert. Dabei kann in einer speziellen Ausführungsvariante der Probekörper bei einer Änderung des Durchflusses seine Position auch ändern, wobei dann aus der Positionsänderung der Duchfluss bestimmbar ist.

Ein wesentliches Kennzeichen der Erfindung besteht darin, dass der Probekörper derart ausgestaltet und im Hohlkörper angeordnet ist, dass der Probekörper vom strömenden Fluid umströmt oder durchströmt und dadurch mit einem Arbeitsdruck beaufschlagt wird, der ein Mass für den Durchfluss des Fluids durch den Hohlkörper ist. Dadurch kann auf eine separate Messeinrichtung ausserhalb des vom Fluid durchströmten Hohlkörpers, wie beispielsweise aus dem Stand der Technik bekannt, verzichtet werden.

Bei einem bevorzugten Ausführungsbeispiel einer erfindungsgemässen Messvorrichtung zur Bestimmung des Durchflusses eines Fluids weist der Hohlkörper einen kreisförmigen Strömungsquerschnitt auf und ist beispielsweise in Form eines zylinderförmigen Rohrs ausgestaltet. Innerhalb des Hohlkörpers ist ein bevorzugt scheibenförmiger magnetischer Probekörper so angeordnet, dass er mit einer Körperachse entlang einer Längsachse des Hohlkörpers in axialer Richtung beweglich ist. Der magnetische Probekörper kann beispielsweise einen scheiben- oder ringförmigen Permanentmagneten umfassen, der je nach Ausführungsform in radialer oder axialer Richtung polarisiert sein kann. Insbesondere kann der Probekörper auch zwei in axialer Richtung entgegengesetzt magnetisierte Magnete umfassen, wobei solche Probekörper im Rahmen dieser Anmeldung als "axial entgegengesetzt magnetisierte Probekörper" bezeichnet werden.

Selbstverständlich kann der Probekörper auch beispielsweise einen oder mehrere in Richtung und / oder senkrecht zur Richtung der Körperachse polarisierten Stabmagneten oder einen anders geformten Magneten umfassen. Weiter kann der Probekörper zur gezielten Umleitung des magnetischen Flusses auch ferromagnetische Komponenten, insbesondere Eisenteile in Form von Scheiben oder Ringen umfassen. Umfasst der magnetische Probekörper im wesentlichen eines oder mehrere ferromagnetische, nicht permanentmagnetische, Materialien wie beispielsweise Eisen, ist das insbeondere dann von Vorteil, wenn das Fluid grösseren Temperaturschwankungen unterliegt. Der Probekörper kann sogar einen von einer elektrischen Energiequelle gespeisten zweiten Elektromagneten umfassen, der über Zuleitungen mit elektrischer Energie gespeist wird, die in eventuell vorhandene Befestigungsmittel für den Probekörper integriert sind. In besonderen Fällen ist es sogar möglich, dass der Probekörper die elektrische Energiequelle selbst umfasst und / oder eine Kombination der zuvor erwähnten Typen von magnetischen Probekörpern Verwendung findet.

Der Hohlkörper umfasst weiter einen Elektromagneten, der geeignet ist, auf den Probekörper eine magnetische Kraft in im wesentlichen axialer Richtung auszuüben. Der Elektromagnet kann eine oder mehrere Spulen umfassen, die in an sich bekannter Weise in Umfangsrichtung aussen am Hohlkörper oder in der Wand des Hohlkörpers, im speziellen auch innerhalb des Hohlkörpers, geeignet angeordnet sind. Bei Erregung des Elektromagneten mit einem elektrischen Strom kann der Elektromagnet mit dem magnetischen Probekörper in Wechelwirkung treten und auf diesen eine Lorentzkraft $\vec{F} = \vec{B} \times \vec{I}$ ausüben, wobei wie üblich $\vec{B}$ die magnetische Flussdichte und $\vec{I}$ den elektrischen Strom durch die Spule des Elektromagneten bezeichnet. In einem speziellen Ausführungsbeispiel der erfindungsgemässen Messvorrichtung kann der magnetische Probekörper, der zum Beispiel im wesentlichen in axialer Richtung magnetisiert sein kann, im Betriebszustand in der Nullage bezüglich dem Feldlinienverlauf des Elektromagneten in axialer Richtung symmetrisch angeordnet und so orientiert sein, dass der Probekörper bezüglich einer axialen Auslenkung immer eine rücktreibende Kraft in Richtung der Nullage erfährt. Das heisst, die Nullage des Probekörpers ist eine stabile Gleichgewichtslage in Bezug auf eine axiale Auslenkung. Dabei ist im Rahmen dieser Anmeldung unter der Nullage diejenige Position im Hohlkörper zu verstehen, die der Probekörper unter Einwirkung einer Magnetkraft des Elektromagneten einnimmt, wenn die Strömungsgeschwindigkeit des Fluids durch den Hohlkörper verschwindet, dass heisst, wenn der Durchfluss des Fluids durch den Hohlkörper null ist.

Bei einem anderen Ausführungsbeispiel ist die Nullage die Probekörpers durch die Regelung, unabhängig von der Position des Probkörpers zum Elektromagneten frei wählbar, d.h. die Nullage kann für jede Messung individuell festgelegt werden. Vorteilhaft kann der magnetische Probekörper in radialer Richtung magnetisiert sein, wobei die Kraft, die der Elektromagnet auf den magnetischen Probekörper im Betriebszustand ausübt, zumindest bei kleinen Auslenkungen aus einer vorgebbaren Nullage in guter Näherung direkt proportional zum Strom durch den Elektromagneten ist.

Die Position des Probekörpers im Hohlkörper ist durch mindestens einen Positionssensor bestimmbar, der bevorzugt aussen oder in der Wand des Hohlkörpers, im speziellen auch innerhalb des Hohlkörpers, so angeordnet ist, dass der Positionssensor eine Position und / oder eine Änderung der Position des Probekörpers detektieren kann. Der Positionssensor ist mit einer Ansteuereinrichtung signalverbunden, wobei die Ansteuereinrichtung Regelmittel umfasst, welche mit Hilfe eines Signals des Positionssensors den Elektromagneten derart ansteuern, dass der magnetische Probekörper gegen den Arbeitsdruck des strömenden Fluids in einer vorgebbaren Position, bevorzugt in seiner Nullage, gehalten wird. Die Ansteuereinrichtung kann eine Auswerteeinheit umfassen, welche mit Hilfe der für die Erregung des Elektromagneten notwendigen elektrischen Energie, insbesondere des elektrischen Stroms oder der Spannung, den Durchfluss des Fluids durch den Hohlkörper ermittelt und über eine Ausgabeeinheit ausgibt. Die Ausgabeeinheit kann zur Anzeige des Durchflusses beispielsweise mit einem Anzeigegerät oder zur Speicherung der Durchflussdaten mit einer Speichereinheit verbunden sein. Zur Ermittelung des Durchflussses des Fluids kann die Ansteuereinrichtung eine ein- oder mehrdimensionale Look-Up-Table umfassen, welche den zugehörigen Wert der Regelgrösse, also beispielsweise den elektrischen Strom durch den Magneten, geeignet mit weiteren Daten verknüpft. Eine solche Look-Up-Table kann durch ein zwei oder mehrdimensionales Datenfeld repräsentiert werden, das unter Berücksichtigung verschiedener Parameter wie beispielsweise Temperatur oder Druck des Fluids und / oder verschiedener Kenngrössen des Fluids wie Dichte, Viskosität oder anderer Kenngrössen, wie beispielsweise geometrischen Kenngrössen der Messvorrichtung, jedem Wert des Stromes, der beispielsweise bei gegebenem Durchfluss zur Stabilisierung der Nullage des Probekörpers in den Elektromagneten eingespeist werden muss, den zugehörigen Wert des Durchflusses des Fluids durch den Hohlkörper zuordnet. Selbstverständlich ist es in bestimmten Fällen auch möglich, die Durchflussmenge ohne Verwendung einer Look-Up-Table, beispielsweise direkt aus dem elektrischen Strom durch den Magneten zu bestimmen. Insbesondere kann die Ansteuereinheit auch dazu geeignet sein, weitere Einrichtungen, wie beispielsweise eine Pumpe für das Fluid, in Abhängigkeit vom Durchfluss zu steuern und / oder zu regeln.

Erfindungsgemäss ist der Probekörper so ausgestaltet und angeordnet, dass das Fluid, vom Zufluss zum Abfluss des Hohlkörpers strömen kann, dass heisst, das Fluid kann den Probekörper entweder entlang einer Oberfläche des Probekörpers zwischen Probekörper und Hohlkörper umfliessen oder der Probekörper weist mindestens eine Bohrung auf, die im Betriebszustand vom Fluid durchströmt werden kann. In einer speziellen Ausführungsform der Messeinrichtung kann das Fluid auch über eine Überströmleitung vom Zufluss zum Abluss des Hohlkörpers strömen. Zum Schutz gegenüber chemisch und / oder physikalisch aggressiven Fluiden, wie beispielsweise Säuren, Laugen, oder mechanisch aggressiven Polierflüssigkeiten, kann der magnetische Probekörper eine Ummantelung aufweisen, indem er zum Beispiel in einem widerstandsfähigen Material vergossen wird oder in einer Schutzhülle untergebracht ist, in der der Probekörper entsprechend frei beweglich angeordnet ist.

Wenn der Probekörper eine Bohrung aufweist, die im Betriebszustand vom Fluid durchströmt wird, kann die äussere Form des Probekörpers so ausgestaltet sein, dass der Probekörper axial frei beweglich und formschlüssig mit dem Innenraum des Hohlkörpers zusammenwirkt. So weist der Hohlkörper bevorzugt einen kreisförmigen Strömungsquerschnitt auf, wobei der Probekörper scheibenförmig bzw. zylinderförmig mit kreisförmigem Querschnitt ausgestaltet ist. Selbstverständlich ist auch jede andere formschlüssige Ausführungsform von Hohlkörper und Probekörper denkbar, sofern der Probekörper axial beweglich bleibt. Selbstverständlich braucht der Probekörper nicht formschlüssig mit dem Innenraum des Hohlkörpers zusammenzuwirken, sondern kann jede äussere Gestalt haben, die eine ausreichende axiale Bewegungsfreiheit gewährleistet. Insbesondere kann der Probekörper, beispielsweise an der Bohrung, auch eine Blende aufweisen, die austauschbar sein kann, so dass die Messvorrichtung an das jeweilige Fluid und / oder einen bevorzugten Messbereich für die Durchflussmenge des Fluids anpassbar ist. Durch den geeigneten Einsatz einer Blende kann bei gegebenem Durchfluss insbesondere die Viskositätsabhängigkeit des Arbeitsdrucks auf den Probekörper minimiert werden, so dass Änderungen der Viskosität des zu messenden Fluids während eines Messvorgangs das Ergebnis der Durchflussmessung nur unwesentlich beeinflussen.

Weist der Probekörper keine Bohrung auf, durch die das Fluid im Betriebszustand vom Zufluss zum Abfluss des Hohlkörpers strömen kann, ist der Probekörper derart ausgestaltet und im Hohlkörper angeordnet, dass das Fluid, zumindest wenn sich der Probekörper in seiner Nullage befindet, den Probekörper umströmen kann. So kann der Probekörper beispielsweise an seinem äusseren Rand Aussparungen aufweisen, die entlang der Körperachse einen Kanal für das Fluid bilden, so dass das Fluid zwischen Probekörper und Innenwand des Hohlkörpers vom Zufluss zum Abfluss strömen kann. Selbstverständlich kann auch die Innenwand des Hohlzylinders entsprechende Aussparungen aufweisen, durch die das Fluid den Probekörper umströmen kann. In bestimmten Fällen, wenn beispielsweise strömungstechnische Vorgaben es erfordern, kann auch jede Kombination der zuvor genannten Ausführungsformen realisiert werden, um dem Fluid das Durchströmen und / oder das Vorbeiströmen am Probekörper zu ermöglichen. Grundsätzlich kann sowohl der Querschnitt des Hohlkörpers als auch die Form des Probekörpers beliebig ausgestaltet sein, wenn die axiale Bewegungsfreiheit des Probekörpers im Magnetfeld des Elektromagneten gewährleistet ist.

So kann der Probekörper zum Beispiel zigarrenförmig ausgestaltet sein, wobei der maximale Durchmesser so gewählt wird, dass der Probekörper auch noch eine gewisse radiale Bewegungsfreiheit aufweist. Das kann beispielsweise von Vorteil sein, wenn der Hohlkörper von Flüssigkeiten durchströmt wird, die in engen Zwischenräumen leicht zum verklumpen neigen oder beispielsweise bei mechanisch aggressiven Polierflüssigkeiten, die in engen Zwischenräumen zwischen Probekörper und Hohlkörper beim Durchströmen zu entsprechenden Schäden an der Messvorrichtung führen können. Insbesondere biologische Flüssigkeiten, wie zum Beispiel Blut, können dazu neigen, an umströmten Flächen eigene Oberflächen von einer gewissen Dicke zu bilden, wofür entsprechend Raum zur Verfügung stehen muss.

Wenn der Probekörper noch eine gewisse radiale Bewegungsfreiheit aufweist, kann die Messvorrichtung Befestigungsmittel zur Stabilisierung, insbesondere der radialen Position des Probekörper umfassen. So kann der Probekörper zum Beispiel mit geeigneten Fäden an der Innenwand des Hohlkörpers fixiert werden oder an Biegebalken aufgehängt sein, die eine hohe transversale Flexibilität aufweisen und dadurch eine genügend hohe axiale Beweglichkeit des Probekörpers gewährleisten. Oder es kann beispielsweise eine Sicke vorgesehen sein, die in Durchflussrichtung eine möglichst konstante Federwirkung aufweist.

Selbstverständlich sind auch andere Befestigungsmittel möglich. Beispielsweise kann der Probekörper auch magnetisch oder auf andere Weise insbesondere radial stabilisiert und / oder fixiert werden.

Insbesondere wenn grosse Durchflussraten des Fluids durch den Hohlkörper realisiert werden müssen, kann der Hohlkörper eine separate Überströmleitung für das Fluid umfassen, die den Zufluss des Hohlkörper mit dem Abfluss des Hohlkörpers verbindet. Die Überströmleitung weist dabei eine Verengung auf, an welcher Verengung das Fluid in an sich bekannter Weise eine Druckdifferenz hervorruft, mit der der Probekörper beaufschlagt wird. Da das Fluid in dieser Anordnung vom Zufluss zum Abfluss des Hohlkörpers durch die Überströmleitung strömen kann, kann der Probekörper derart formschlüssig ausgestaltet und im Hohlkörper axial beweglich angeordnet sein, dass das Fluid den Hohlkörper weder umströmen noch durchströmen kann. Selbstverständlich kann jedoch auch bei dieser Ausführungsvariante der Probekörper so ausgestaltet und angeordnet sein, dass, wie oben beschrieben, das Fluid den Probekörper umströmen und / oder durch eine Bohrung durchströmen kann.

Grundsätzlich kann bei der erfindungsgemässen Messvorrichtung die Orientierung der Richtung, in der der Probekörper beweglich angeordnet ist, einen beliebigen Winkel zur Richtung der Schwerkraft einnehmen. Wirkt jedoch zusätzlich zur Magnetkraft des Elektromagneten und zur Kraft, die der Probekörper durch Beaufschlagung mit dem Arbeitsdruck erfährt, noch eine Schwerkraftkomponente auf den Probekörper, muss diese zur Ermittlung des korrekten Durchflusses des Fluids selbstverständlich ebenfalls berücksichtigt werden. Allerdings kann durch geeignete Wahl der mittleren Dichte des Probekörpers dessen Gewichtskraft entgegengesetzt gleich den Auftriebskräften im Fluid eingestellt werden, so dass die Messvorrichtung unabhängig von der Bewegungsrichtung des Probekörpers in Bezug auf die Schwerkraft betrieben werden kann und die Gewichtskraft des Probekörpers zur Ermittlung des Durchflusses des Fluids nicht mehr berücksichtigt zu werden braucht.

Erfindungsgemäss umfasst die Messvorrichtung eine Ansteuereinrichtung für den Elektromagneten, welche mit mindestens einem Positionssensor zur Bestimmung der Position des Probekörpers signalverbunden ist und wobei die Ansteuereinrichtung Regelmittel umfasst, welche mit Hilfe eines Signals des Positionssensors den Elektromagneten derart ansteuern, dass der magnetische Probekörper gegen den Arbeitsdruck in einer Position, vorzugsweise in der Nullage gehalten wird. Dabei ist der Positionssensor bevorzugt aussen am Hohlkörper oder in der Wand des Hohlkörpers so angeordnet ist, dass der Positionssensor eine Position und / oder eine Änderung der Position des Probekörpers detektieren kann. Selbstverständlich kann der Positionssensor auch innerhalb des Hohlkörpers geeignet angeordnet sein. Als Positionssensor kommt bevorzugt ein Magnetfeldsensor, insbesondere eine Hallsonde, ein Differentialfeldsensor, zum Beispiel ein GMR-Sensor (Giant Magnetoresistive Sensor), oder ein LVDT (Linear Variable Differential Transformer), oder ein Wirbelstromsensor zum Einsatz. Selbstverständlich ist es auch möglich die Position des Probekörpers auf andere Weise, z.B. mittels Lichtschranke mit optischen Mittel oder anders zu bestimmen.

Bevorzugt kommen jeweils mindestens zwei Positionssensoren zur Bestimmung der Position des magnetischen Probekörpers zum Einsatz, die in Anordnung einer Brückenschaltung mit der Ansteuereinrichtung verbunden sind und im Falle einer Auslenkung des Probekörpers aus einer vorgebbaren Position ein Differenzsignal an die Ansteuereinrichtung liefern, dessen Stärke und Vorzeichen abhängig von der Grösse und Richtung der Auslenkung ist. Insbesondere können beispielsweise zwei, bevorzugt vier Positionssensoren derart gegenüberliegend am Hohlkörper angeordnet sein, dass die Stärke des Differenzsignals nur von der axialen Verschiebung abhängt, wogegen eine radiale Verschiebung unberücksichtigt bleibt.

Dabei kann der Probekörper zusätzlich einen oder mehrere Positionsgeber aufweisen, die zur Bestimmung der Position des Probekörpers mit dem Positionssensor zusammenwirken. Durch die Verwendung von Positionsgebern im Probekörper kann die Empfindlichkeit der Messvorrichtung erhöht und eine Entkopplung des Positionssensors vom magnetischen Probekörper erreicht werden. Je nach Art des verwendeten Positionssensors kann der Positionsgeber permanentmagnetische, ferromagnetische, elektrisch leitende, optische oder andere Komponenten umfassen.

Wird der Probekörper durch das durch den Hohlkörper strömende Fluid mit einem Arbeitsdruck beaufschlagt, erfährt der Probekörper aufgrund der auf ihn wirkenden Druckdifferenz eine Kraft, die ihn im wesentlichen in axialer Richtung auslenkt, wobei die Kraft, die auf den Probekörper wirkt, umso grösser ist, je grösser der Durchfluss des Fluids durch den Hohlkörper ist. In Abhängigkeit von dem Signal, dass der Positionssensor an die Ansteuereinheit liefert, wird die dem Elektromagneten zugeführte Energie derart geregelt, dass die Kraft, die das magnetische Feld des Elektromagneten auf den Probekörper ausübt gerade so gross ist, dass der Probekörper in einer vorgebbaren Position, bevorzugt in seiner Nullage, verbleibt. Als bevorzugte Regelgrösse zur Regelung des Elektromagneten wird dabei der elektrische Strom herangezogen, der den Elektromagneten durchfliesst. Selbstverständlich kommen auch andere elektrische Betriebsgrössen, wie zum Beispiel die elektrische Spannung, als Regelgrössen in Frage.

Die Regelmittel umfassen in einer bevorzugten Ausführungsform der erfindungsgemässen Messvorrichtung einen an sich bekannten PI-Regler (Proportional-Integral-Regler), einen bekannten PID-Regler (Proportional-Integral-Differential-Regler) oder einen Zustandsregler, sowie eine elektrische Energiequelle zur Versorgung des Elektromagneten mit elektrischer Energie.

Die Ansteuereinrichtung kann darüber hinaus eine Auswerteeinheit umfassen, welche mit Hilfe der für die Erregung des Elektromagneten notwendigen elektrischen Energie, insbesondere des elektrischen Stroms, den Durchfluss des Fluids durch den Hohlkörper ermittelt und über eine Ausgabeeinheit ausgibt. Die Ausgabeeinheit kann zur Anzeige des Durchflusses beispielsweise mit einem Anzeigegerät oder zur Speicherung der Durchflussdaten mit einer Speichereinheit verbunden sein und in speziellen Fällen mit anderen Regeleinrichtungen zusammenwirken.

In der Regel steht der Durchfluss des Fluids durch den Hohlkörper nicht in einem einfachen Zusammenhang mit dem durch das strömende Fluid auf den Probekörper hervorgerufen Arbeitsdruck. Damit gilt dasselbe für den Zusammenhang zwischen Regelgrösse, also z.B. dem elektrischen Strom durch den Elektromagneten und dem Durchfluss des Fluids. In besonderen Fällen steigt der Strom, mit dem der Elektromagnet zur Stabilisierung der Nullage des Probekörpers gespeist werden muss, quadratisch mit dem Durchfluss des Fluids durch den Hohlkörper an. Dieser einfache Zusammenhang ist in der Praxis jedoch häufig nicht realisiert und kann je nach Art der Flüssigkeit charakteristisch verschieden sein. Insbesondere können auch verschiedene Kenngrössen der Flüssigkeit, wie die Viskosität, die Dichte oder Parameter, wie beispielsweise die Temperatur des Fluids oder geometrische Faktoren, den Zusammenhang zwischen Regelgrösse und Durchfluss des Fluids empfindlich beeinflussen.

Daher muss zur Bestimmung des Durchflusses der zugehörige Wert der Regelgrösse, also beispielsweise der elektrische Strom durch den Magneten, geeignet mit Daten verknüpft werden, die in einem Datenspeicher, beispielsweise in Form einer sogenannten Look-Up-Table, zur Verfügung gestellt werden. Eine solche Look-Up-Table kann durch ein zwei oder mehrdimensionales Datenfeld repräsentiert werden, das unter Berücksichtigung verschiedener Parameter wie beispielsweise Temperatur oder Druck des Fluids und / oder verschiedener Kenngrössen des Fluids wie Dichte, Viskosität oder anderer Kenngrössen, beispielsweise geometrischer Faktoren, jedem Wert des Stromes, der bei gegebenem Durchfluss zur Stabilisierung der Nulllage des Probekörpers in den Elektromagneten eingespeist werden muss, den zugehörigen Wert der Durchflusses des Fluids durch den Hohlkörper zuordnet.

In einer anderen Ausführungsform der erfindungsgemässen Messvorrichtung variiert der Strömungsquerschnitt des Hohlkörpers entlang der Längsachse und / oder die Querschnittsfläche des Probekörpers variiert entlang der Körperachse nach einem vorgebbaren Schema. In einer bevorzugten Ausführungsvariante erweitert sich der Strömungsquerschnitt des Hohlkörpers ausgehend vom Zufluss in Richtung zum Abfluss konisch von einem ersten Strömungsquerschnitt auf einen zweiten Strömungsquerschnitt und / oder der Strömungsquerschnitt des Hohlkörpers verringert sich ausgehend vom Zufluss in Richtung zum Abfluss konisch von einem dritten Strömungsquerschnitt auf einen vierten Strömungsquerschnitt. Entsprechend erweitert sich die dem Zufluss zugewandte Seite des Probekörpers von einem ersten Durchmesser einer Querschnittsfläche des Probekörpers auf einen zweiten Durchmesser einer Querschnittsfläche des Probekörpers und / oder es verringert sich eine Querschnittsfläche des Probekörpers auf einer dem Abfluss zugewandte Seite des Probekörpers, so dass der Probekörper mit dem Hohlkörper derart zusammenwirkt, dass der Durchfluss vom Abstand des Probekörpers zum Zufluss bzw. zum Abfluss abhängt.

Damit ist es insbesondere möglich, die Auflösung der Messvorrichtung für spezielle Anforderungen zu optimieren bzw. an spezielle Messbereiche für den Durchfluss anzupassen. So kann beispielsweise durch Einstellung eines festen Wertes des elektrischen Stroms, der den Elektromagneten speist, der Druckabfall über den Probekörper konstant gehalten werden, so dass aus der Position des Probekörpers der Durchfluss des Fluids ermittelbar ist. Dabei kann je nach Anforderung die Position der Nullage durch die Ansteuereinrichtung für jede Messung individuell angepasst werden, so dass beispielsweise die Steilheit einer Kennlinie, die den Durchfluss des Fluids mit dem zugehörigen Strom durch den Elektromagneten verknüpft, variiert wird, wodurch die Messempfindlichkeit verändert werden kann. Das heisst, durch geeignete Wahl der Nullage kann ein und dieselbe Messeinrichtung für verschiedene Messbereiche des Durchflusses konfiguriert werden und sogar während des Betriebes der Messbereich angepasst werden.

Insbesondere ist der Probekörper so ausgestaltet, dass der Probekörper mit dem Hohlkörper derart zusammenwirkt, dass durch geeignete Positionierung des Probekörpers der Durchfluss des Fluids durch den Hohlkörper vollständig unterbunden ist. Bevorzugt weist der Probekörper und / oder der Hohlkörper, wie bereits beschrieben, eine Aussparung auf, die entlang der Körperachse einen Kanal für das Fluid bildet, so dass in Abhängigkeit von der Position des Probekörpers das Fluid zwischen Probekörper und Innenwand des Hohlkörpers vom Zufluss zum Abfluss strömen kann oder nicht. Zur Erfüllung der gleichen Funktion kann der Probekörper selbstverständlich auch eine oder mehrere Bohrungen aufweisen. Mit dieser Ausführungsvarainte kann einerseits wie oben beschrieben der Durchfluss des Fluids durch den Hohlkörper bestimmt werden; andererseits kann der Durchfluss des Fluids auch geregelt werden, indem auf den magnetischen Probekörper durch den Elektromagneten derart eine Kraft ausgeübt wird, dass der Probekörper in eine vorgebbare Position gebracht und dort gehalten wird.

In einem bevorzugten Ausführungsbeispiel umfasst die Ansteuervorrichtung einen Ventilregler, der einen vorgebbaren Soll-Wert für den Durchfluss des Fluids mit einem aus der Regelgrösse, beispielsweise aus der Grösse des elektrischen Stroms durch den Elektromagneten, bestimmten Ist-Wert vergleicht, so dass die Ansteuereinheit den Elektromagneten derart ansteuert, dass der vorgegebene Sollwert eingeregelt wird. Zur Bestimmung und Regelung des Durchflusses des Fluids wird bevorzugt eine Look-Up-Table herangezogen, die, wie bereits ausgeführt, durch ein zwei oder mehrdimensionales Datenfeld repräsentiert werden kann, das unter Berücksichtung verschiedener Parameter wie beispielsweise der Temperatur oder dem Druck des Fluids und / oder verschiedener Kenngrössen des Fluids wie Dichte, Viskosität oder anderer Kenngrössen, einem Durchfluss des Fluids durch den Hohlkörper einen Wert des elektrischen Stromes zuordnet, der zur entsprechenden Positionierung des Probekörpers in den Elektromagneten eingespeist werden muss. Selbstverständlich ist es mit Hilfe der Look-UP-Table auch möglich, einem vorgegebenen Wert des elektrischen Stromes den dazugehörigen Durchfluss des Fluids zuzuordnen und eventuell weitere Einrichtungen, wie beispielsweise eine Pumpe für das Fluid in Abhängigkeit vom Durchfluss zu steuern und / oder zu regeln.

Darüberhinaus kann die Messvorrichtung auch zur Bestimmung einer Kenngrösse des Fluids, insbesondere der Viskosität und / oder der Dichte verwendet werden. Bevorzugt wird dazu der Probekörper bei konstantem Durchfluss durch die Magnetkraft des Elektromagneten an einer vorgebbaren Position, beispielsweise in der Nullage oder an einer anderen Position gehalten. Wenn sich bei konstantem Durchfluss des Fluids in Abhängigkeit von der Zeit eine Kenngrösse des Fluids, beispielsweise die Viskosität, die Dichte oder eine andere Kenngrösse ändert, muss im allgemeinen der Wert des elektrischen Stromes, der durch den Elektromagneten fliesst, entsprechend angepasst werden, wenn der Probekörper die vorgegebene Position im Hohlkörper beibehalten soll. Analog dem zuvor beschriebenen Verfahren kann dann unter Verwendung einer entsprechenden Look-Up-Table bei gegebenem Durchfluss aus dem Wert und / oder der Änderung des elektrischen Stromes durch den Elektromagneten die entsprechende Kenngrösse und / oder deren Veränderung bestimmt werden.

Da die Messgenauigkeit der Messvorrichtung unter anderem auch vom Durchfluss des Fluids abhängig ist, steht mit dem zuvor beschriebenen Ausführungsbeispiel eine Messvorrichtung mit einstellbarer Messgenauigkeit zur Verfügung. So kann beispielsweise die Messgenauigkeit der Messvorrichtung erhöht werden, indem der Probekörper an einer vorgebbaren Position gehalten wird, die einem höheren Durchfluss entspricht. Entsprechend verringert sich in der Regel die Messgenauigkeit, wenn der Durchfluss verringert wird. Bevorzugt kann die Position des Probekörpers so eingestellt werden, dass bei maximal tolerierbarem Druckabfall über den Probekörper eine optimale Auflösung erreicht wird. Insbesondere kann der Strom durch den Elektromagneten für einen gegebenen Messbereich des Durchflusses beispielsweise auf einen konstanten Wert eingestellt werden, so dass bei sich änderndem Durchfluss die Druckdifferenz über den Probekörper im wesentlichen konstant bleibt und der Durchfluss des Fluids und / oder die Änderung des Durchflusses aus der Position und / oder der Änderung der Position des Probekörpers bestimmbar ist.

Das erfindungsgemässe Verfahren zur Bestimmung des Durchflusses eines Fluids wird mittels einer Messvorrichtung durchgeführt, welche einen Hohlkörper umfasst, der einen Zufluss und einen Abfluss für das Fluid aufweist, und in welchem Hohlkörper ein magnetischer Probekörper beweglich angeordnet ist. Die Messvorrichtung umfasst weiter einen Elektromagneten zum Ausüben einer Magnetkraft auf den magnetischen Probekörper, sowie eine Ansteuereinheit für den Elektromagneten, die mit mindestens einem Positionssensor zur Bestimmung der Position des magnetischen Probekörpers signalverbunden ist. Bei dem erfindungsgemässen Verfahren durchströmt das Fluid den Hohlkörper vom Zufluss zum Abfluss, so dass der Probekörper mit einem Arbeitsdruck beaufschlagt wird. Mit Hilfe eines Signals des Positionssensors wird der Elektromagnet derart angesteuert, dass der magnetische Probekörper gegen den Arbeitsdruck in einer Position gehalten wird.

Darüber hinaus wird die Messvorrichtung erfindungsgemäss zur Bestimmung einer Kenngrösse eines Fluids, insbesondere der Viskosität und / oder der Dichte verwendet, sowie als Ventil und / oder als Durchflussregelsystem für ein Fluid verwendet.

Im folgenden wird die Erfindung an Hand der Zeichnung näher erläutert. Es zeigen:

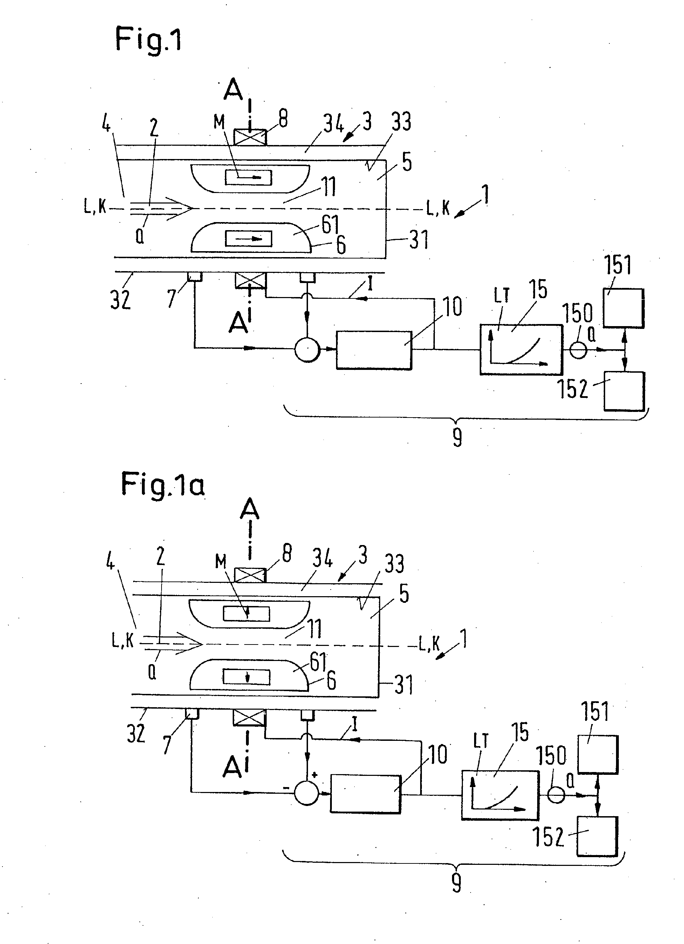

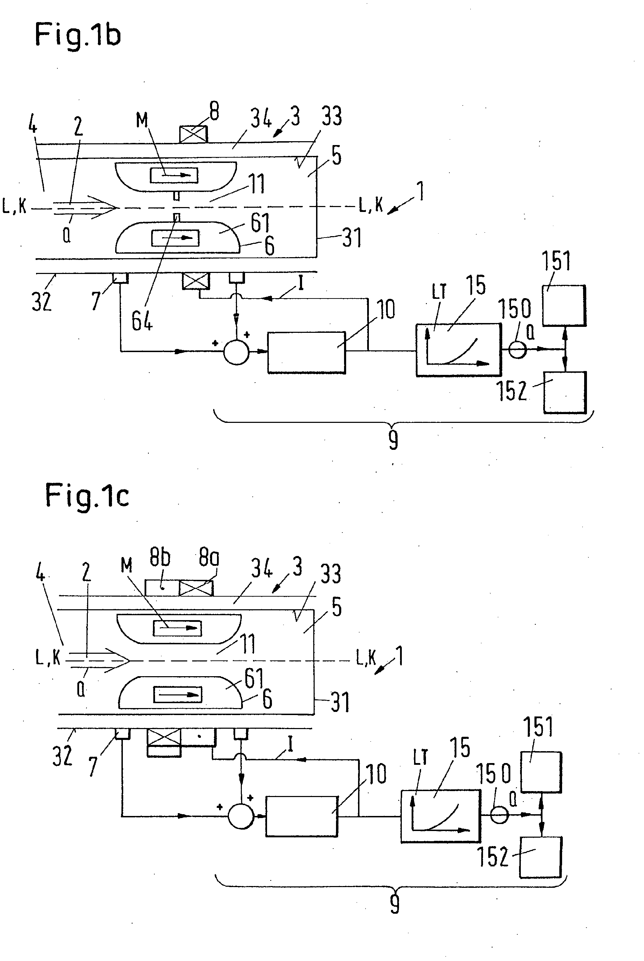

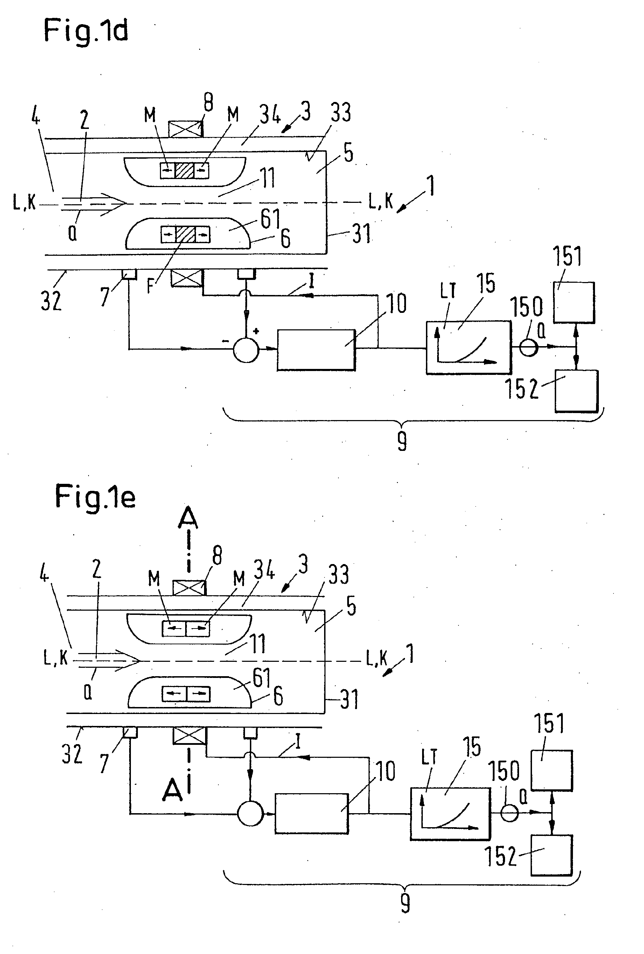

Fig. 1 ein Ausführungsbeispiel einer erfindungsgemässen Messvorrichtung mit Ansteuereinheit;

Fig. 1a ein zweites Ausführungsbeispiel gemäss Fig. 1 mit radial magnetisiertem Probkörper;

Fig. 1 b ein drittes Ausführungsbeispiel gemäss Fig. 1 mit einer in einer Bohrung angeordneten Blende:

Fig. 1c ein viertes Ausführungsbeispiel gemäss Fig. 1 mit einem zwei Spulen umfassenden Elektromagneten;

Fig. 1d ein fünftes Ausführungsbeispiel gemäss Fig. 1 mit ferromagnetischer Flussbündelung im Probekörper;

Fig. 1e ein sechstes Ausführungsbeispiel gemäss Fig. 1 mit axial entgegengesetzt magnetisiertem Probekörper;

Fig. 2 einen magnetischen Probekörper angeordnet unter einer flexiblen Schutzhülle;

Fig. 2a ein zweites Ausführungsbeispiel gemäss Fig. 2 mit axial entgegengesetzt magnetisiertem Probekörper und Flussbündelung;

Fig. 3 einen Schnitt A - A gemäss Fig. 1;

Fig. 4 ein Ausführungsbeispiel eines magnetischen Probekörpers, der keine Durchbohrung aufweist;

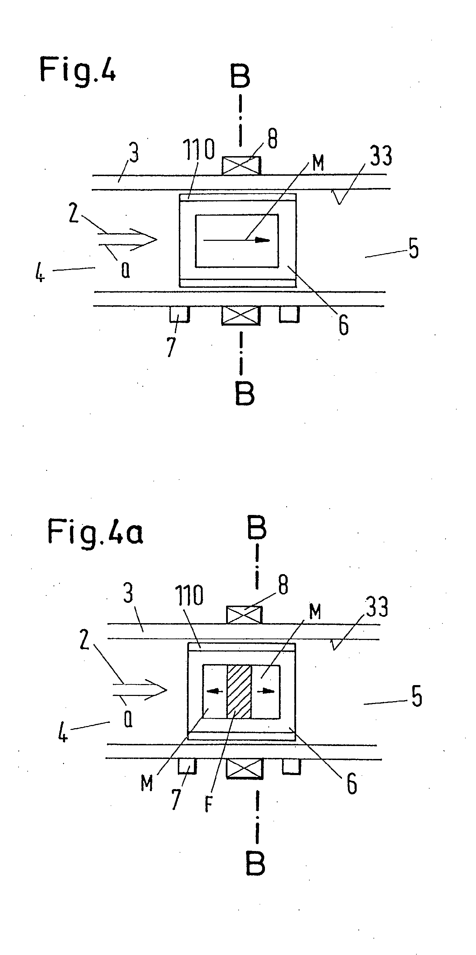

Fig. 4 a ein zweites Ausführungsbeispiel gemäss Fig. 4 mit axial entgegengesetzt magnetisiertem Probekörper und Flussbündelung;

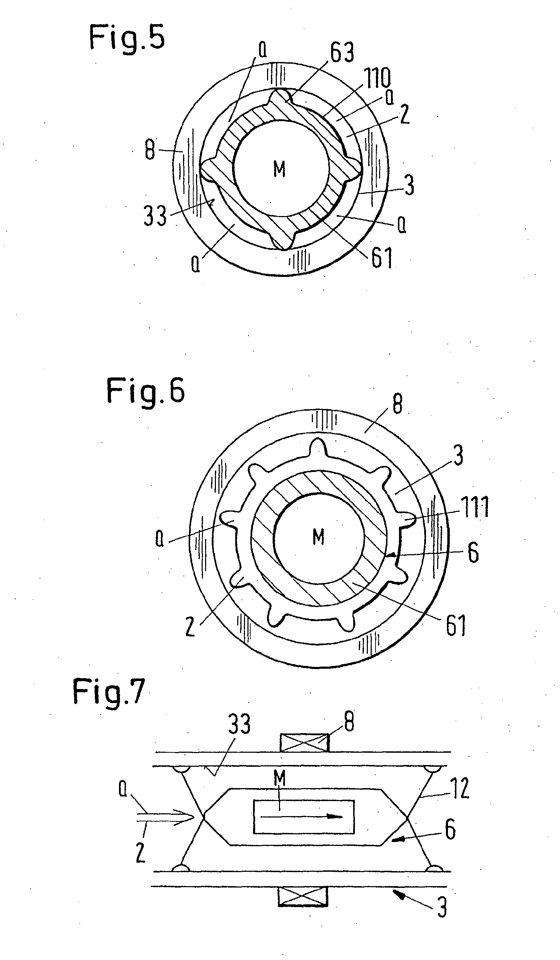

Fig. 5 einen Schnitt B - B gemäss Fig. 4 und Fig. 4a;

Fig. 6 eine Darstellung eines Hohlkörpers im Schnitt mit Leitkanälen für das Fluid;

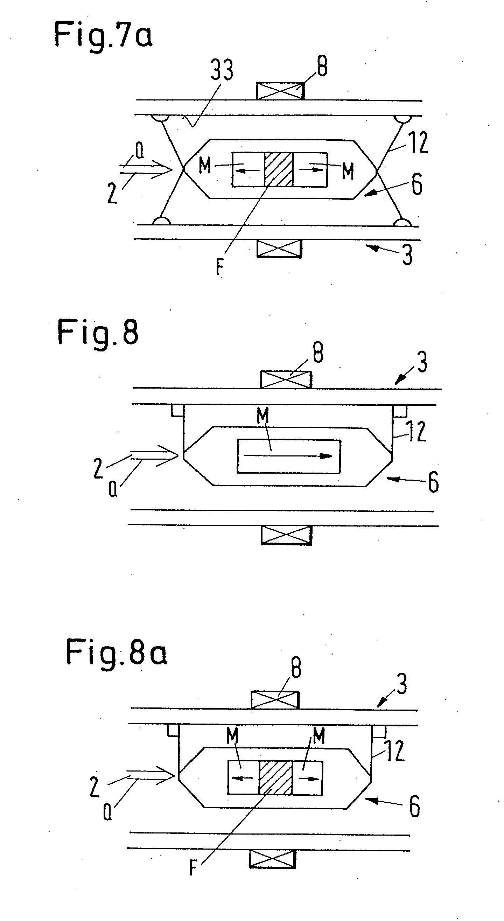

Fig. 7 einen durch Befestigungsmittel radial stabilisierten Probekörper;

Fig. 7a ein zweites Ausführungsbeispiel gemäss Fig. 7 mit axial entgegengesetzt magnetisiertem Probekörper und Flussbündelung;

Fig. 8 ein drittes Ausführungsbeispiel gemäss Fig. 7;

Fig. 8a ein viertes Ausführungsbeispiel gemäss Fig. 8 mit axial entgegengesetzt magnetisiertem Probekörper und Flussbündelung;

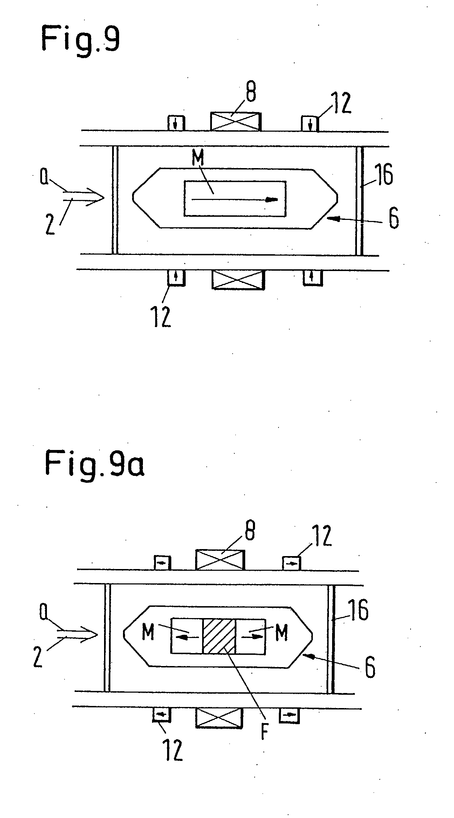

Fig. 9 ein Ausführungsbeispiel gemäss Fig. 7, wobei der Probekörper mit magnetischen Befestigungsmittel radial stabilisiert ist;

Fig. 9a ein zweites Ausführungsbeispiel gemäss Fig. 9 mit axial entgegengesetzt magnetisiertem Probekörper und Flussbündelung;

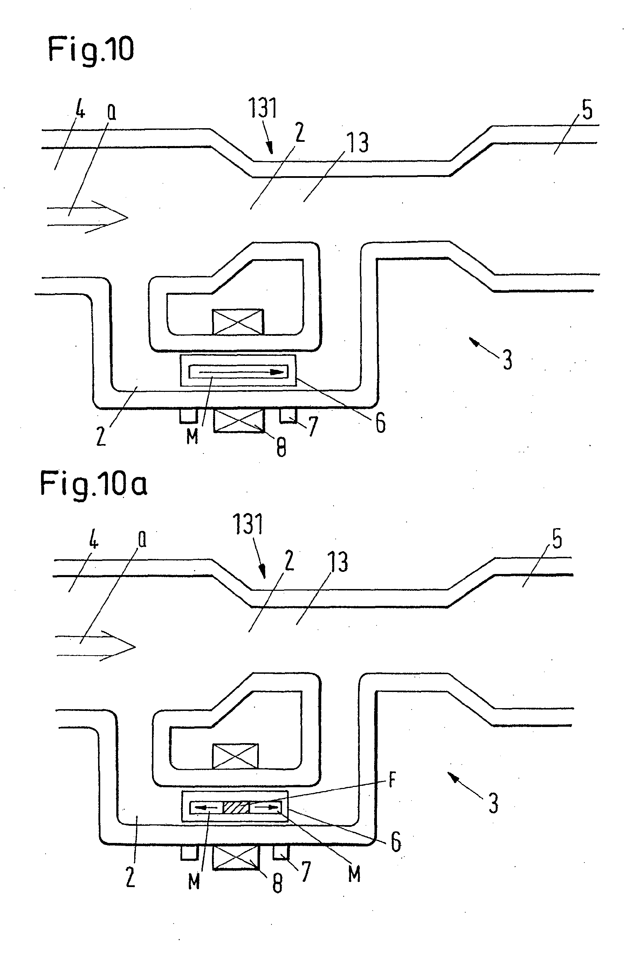

Fig. 10 ein Ausführungsbeispiel einer Messvorrichtung mit Überströmleitung;

Fig. 10a ein zweites Ausführungsbeispiel gemäss Fig. 10 mit axial entgegengesetzt magnetisiertem Probekörper und Flussbündelung;

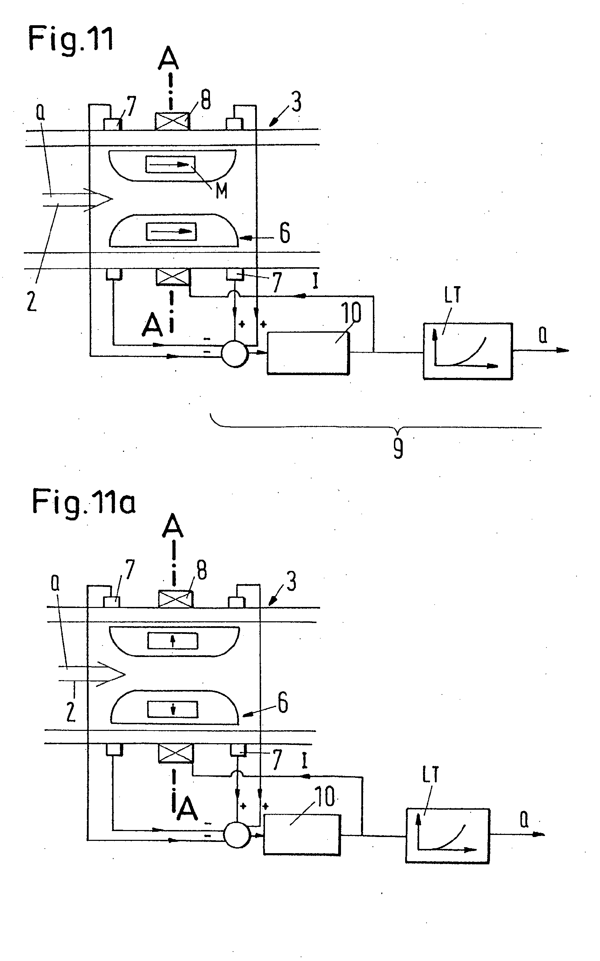

Fig. 11 ein Ausführungsbeispiel einer Messvorrichtung mit mehreren Positionssensoren;

Fig. 11a ein zweites Ausführungsbeispiel gemäss Fig. 11 mit radial magnetisiertem Probekörper;

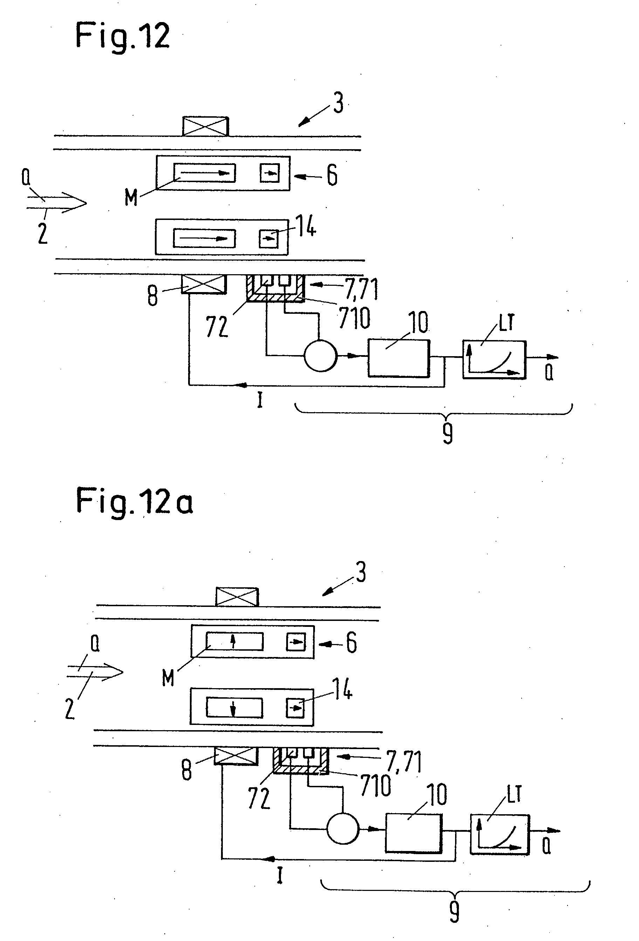

Fig. 12 ein Ausführungsbeispiel gemäss Fig. 11 mit einem Positionsgeber;

Fig. 12a ein zweites Ausführungsbeispiel gemäss Fig. 12 mit radial magnetisiertem Probekörper;

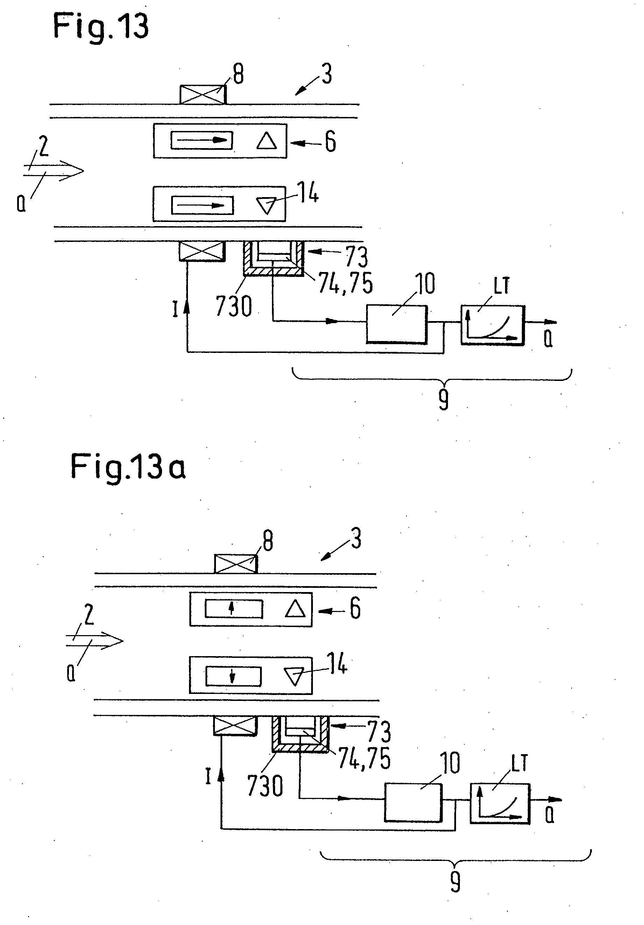

Fig. 13 ein Ausführungsbeispiel einer Messvorrichtung mit Positionsgeber und Differentialfeldsensor;

Fig. 13a ein zweites Ausführungsbeispiel gemäss Fig. 13 mit radial magnetisiertem Probekörper;

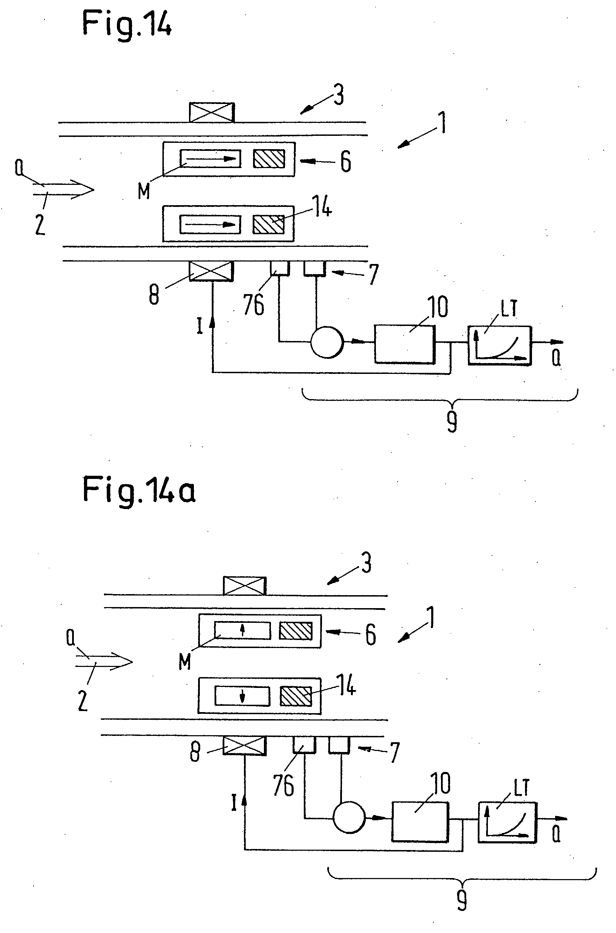

Fig. 14 eine drittes Ausführungsbeispeil gemäss Fig. 13 einer Messvorrichtung mit Positionsgeber und Wirbelstromsensor;

Fig. 14a ein viertes Ausführungsbeispiel gemäss Fig. 13 mit radial magnetisiertem Probekörper;

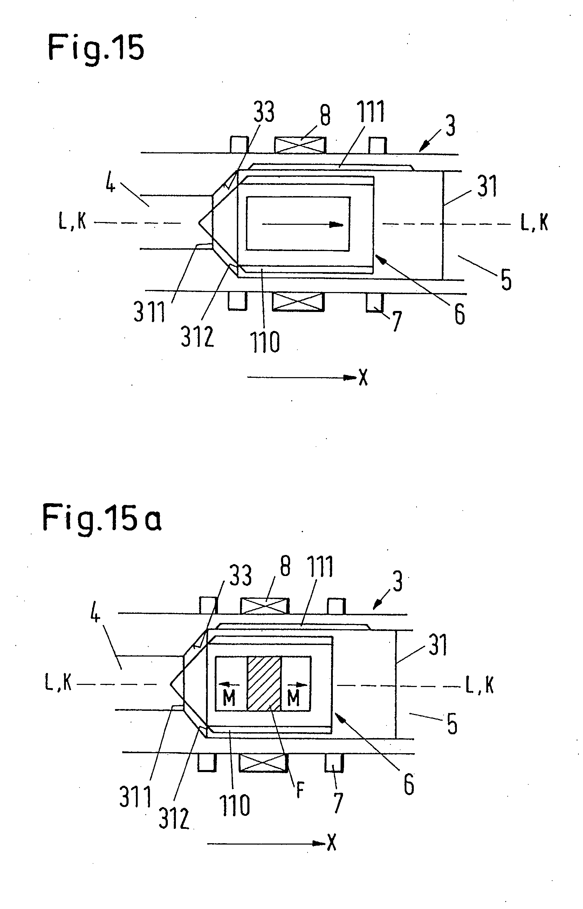

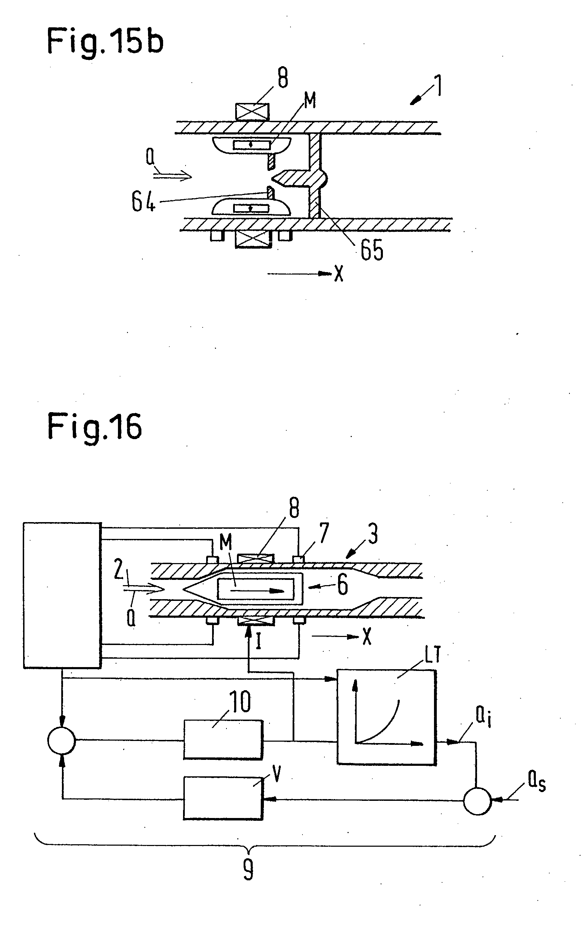

Fig. 15 einen Hohlkörper mit sich erweiterndem Strömungsquerschnitt mit der Möglichkeit zur Regulierung der Durchflussmenge;

Fig. 15a ein zweites Ausführungsbeispiel gemäss Fig. 15 mit axial entgegengesetzt magnetisiertem Probekörper und Flussbündelung;

Fig. 15b ein anderes Ausführungsbeispiel mit der Möglichkeit zur Regulierung der Durchflussmenge;

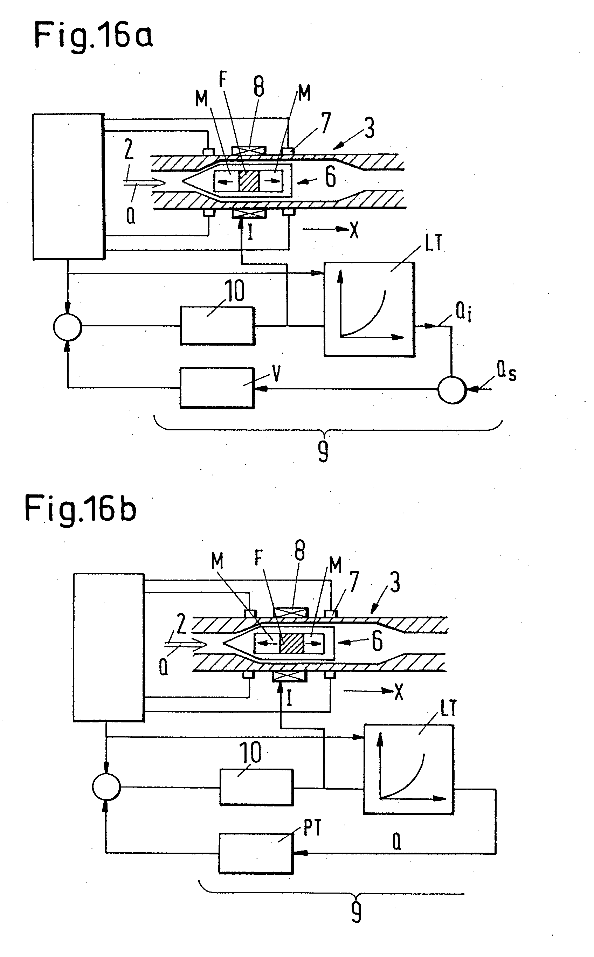

Fig. 16 eine Messvorrichtung mit einem Hohlkörper gemäss Fig. 15, sowie einer Ansteuereinrichtung mit äusserem Regelkreis;

Fig. 16a ein zweites Ausführungsbeispiel gemäss Fig. 16 mit axial entgegengesetzt magnetisiertem Probekörper und Flussbündelung;

Fig. 16b ein drittes Ausführungsbeispiel gemäss Fig. 16;

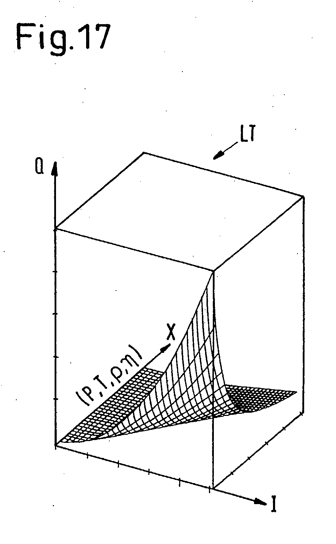

Fig. 17 schematisch eine Darstellung einer mehrdimensionalen Look-Up-Table in Form eines Kurvendiagramms.

Fig. 1 zeigt in einer schematischen Darstellung eine erfindungsgemässe Messvorrichtung zur Bestimmung des Durchflusses eines Fluids, welche Messvorrichtung im folgenden gesamthaft mit dem Bezugszeichen 1 bezeichnet wird.

Die in Fig. 1 dargestellte Messvorrichtung 1 umfasst einen Hohlkörper 3, der einen kreisförmigen Strömungsquerschnitt 31 aufweist und in Form eines zylinderförmigen Rohrs ausgestaltet ist. Der Hohlkörper 3 wird, wie durch den Doppelpfeil angedeutet, von einem Fluid 2 durchflossen, wobei der Durchfluss des Fluids 2 pro Zeiteinheit mit dem Bezugszeichen Q bezeichnet ist. Innerhalb des Hohlkörpers 3 ist ein bevorzugt scheibenförmiger magnetischer Probekörper 6 so angeordnet, dass er mit einer Körperachse K entlang einer Längsachse L des Hohlkörpers 3 in axialer Richtung beweglich ist. Der Probekörper 6 wird dabei durch das strömende Fluid 2 mit einem Arbeitsdruck, der eine Kraft in Richtung des strömenden Fluids 2 auf den magnetischen Probekörper 6 ausübt, beaufschlagt. Der magnetische Probekörper 6 kann beispielsweise einen scheiben- oder ringförmigen Permanentmagneten umfassen, der in Richtung der Körperachse K polarisiert ist, die senkrecht auf der Ringscheibe steht und in Richtung der Längsachse L des Hohlzylinders 3 zeigt. Selbstverständlich kann der Probekörper 6 auch beispielsweise einen in Richtung der Körperachse K polarisierten Stabmagneten oder einen anders geformten Magneten umfassen. Dabei kann der magnetische Probekörper 6 auch ein ferromagnetisches Material F wie beispielsweise Eisen umfassen, das insbesondere dann von Vorteil ist, wenn das Fluid 2 grösseren Temperaturschwankungen unterliegt.

Der Hohlkörper 3 umfasst weiter einen Elektromagneten 8, der geeignet ist, auf den Probekörper 6 eine magnetische Kraft in im wesentlichen axialer Richtung auszüuben. Der Elektromagnet 8 umfasst eine Spule, die in an sich bekannter Weise in Umfangsrichtung an der Aussenwand 32 des Hohlkörper 3 angeordnet ist. Bei Erregung des Elektromagneten 8 mit einem elektrischen Strom I kann der Elektromagnet 8 mit dem magnetischen Probekörper 6 in Wechselwirkung treten und auf diesen eine Lorentzkraft $\vec{F} = \vec{B} \times \vec{I}$ ausüben, wobei wie üblich $\vec{B}$ die magnetische Flussdichte und $\vec{I}$ den elektrischen Strom durch die Spule des Elektromagneten bezeichnet. Der magnetische Probekörper 3 ist dabei in dem in Fig. 1 dargestellten Ausführungsbeispiel im Betrieb in der Nullage bezüglich dem Feldlinienverlauf des Elektromagneten 8 in axialer Richtung symmetrisch angeordnet und so orientiert, dass der Probekörper 6 bezüglich einer axialen Auslenkung immer eine rücktreibende Kraft in Richtung der Nullage erfährt, wobei in der exakten Nullage die Lorentzkraft verschwindet. Das heisst, die Nullage des Probekörpers 6 ist hier eine stabile Gleichgewichtslage in Bezug auf eine axiale Auslenkung. Dabei ist, wie bereits erwähnt, im Rahmen dieser Anmeldung unter der Nullage diejenige Position X im Hohlkörper 3 zu verstehen, die der Probekörper 6 unter Einwirkung einer Magnetkraft des Elektromagneten 8 einnimmt, wenn die Strömungsgeschwindigkeit des Fluids 2 durch den Hohlkörper 3 verschwindet, dass heisst, wenn der Durchfluss des Fluids 2 durch den Hohlkörper 3 null ist. Selbstverständlich kann die Nulllage auch durch entsprechende Ansteuerung des Elektromagneten 8 frei vorgegeben und je nach Anforderungen im Betrieb verändert werden.

Die Position X des Probekörpers 6 im Hohlkörper 3 ist durch die beiden Positionssensoren 7 bestimmbar, die an der Aussenwand 32 des Hohlkörpers 3 so angeordnet sind, dass sie eine Position X und / oder eine Änderung der Position X des Probekörpers detektieren können. Die Positionssensoren 7 sind mit einer Ansteuereinrichtung 9 signalverbunden, wobei die Ansteuereinrichtung 9 Regelmittel 10 umfasst, welche mit Hilfe eines Signals der Positionssensoren 7 den Elektromagneten 8 derart ansteuern, dass der magnetische Probekörper 6 gegen den Arbeitsdruck des strömenden Fluids 2 in einer vorgebbaren Position X, bevorzugt in seiner Nullage, gehalten wird. Die Ansteuereinrichtung 9 umfasst eine Auswerteeinheit 15, welche mit Hilfe der für die Erregung des Elektromagneten 8 notwendigen elektrischen Stroms I, den Durchfluss Q des Fluids durch den Hohlkörper 3 ermittelt und über eine Ausgabeeinheit 150 ausgibt. Die Ausgabeeinheit 150 ist zur Anzeige des Durchflusses Q mit einem Anzeigegerät 151 und zur Speicherung der Durchflussdaten mit einer Speichereinheit 152 verbunden.

Zum Schutz gegenüber chemisch und / oder physikalisch aggressiven Fluiden 2, wie beispielsweise Säuren, Laugen, oder mechanisch aggressiven Polierflüssigkeiten, weist der magnetische Probekörper 6 eine Ummantelung 61 auf.

Weiter weist der Probekörper 3 eine Bohrung 11 auf, die im Betriebszustand vom Fluid 2 durchströmt wird. Dabei ist in dem hier dargestellten bevorzugten Ausführungsbeispiel die äussere Form des Probekörpers 6 so ausgestaltet, dass der Probekörper 6 axial frei beweglich und formschlüssig mit einer Innenfläche 33 des Hohlkörpers 3 zusammenwirkt. Bevorzugt weist der Hohlkörper 3 einen kreisförmigen Strömungsquerschnitt 31 auf, wobei der Probekörper 6 scheibenförmig bzw. zylinderförmig mit kreisförmigem Querschnitt ausgestaltet ist. Selbstverständlich ist auch jede andere formschlüssige Ausführungsform von Hohlkörper 3 und Probekörper 6 möglich, sofern der Probekörper 6 axial beweglich bleibt. Selbstverständlich braucht der Probekörper 6 nicht formschlüssig mit dem Innenraum des Hohlkörpers 3 zusammenzuwirken, sondern kann jede äussere Gestalt haben, die eine axiale Bewegungsfreiheit gewährleistet.

Die Figuren 1a bis 1e zeigen weitere Ausführungsformen der Messvorrichtung 1 gemäss Fig. 1.

In Fig. 1a ist ein zweites Ausführungsbeispiel gemäss Fig 1 dargestellt, bei welchem der scheiben- oder ringförmige Permanentmagnet in radialer Richtung polarisiert ist. Bei diesem Ausführungsbeipiel kann die Nullage durch entsprechende Ansteuerung des Elektromagneten 8 frei vorgegeben und je nach Anforderungen im Betrieb verändert werden.

Zum Ermitteln der Viskosität η des Fluids 2 kann der magnetische Probekörper 6 auch um seine axiale Position X mit Hilfe des Elektromagneten 8 oszilliert werden. Bei gegebener Frequenz und Amplitude des Stromes I ist dann die resultierende Bewegung des Probekörpers 6 (Amplitude und Phasenlage gegenüber der Anregung) ein Mass für die Viskosität η. Das heisst, bei Kenntnis der elektrischen Anregungsgrössen und der mechanischen Antwort des Probekörpers 6 ist die Viskosität bestimmbar. Natürlich kann auch jede andere Grösse, wie beispielsweise die Amplitude der Bewegung vorgegeben werden und die Amplitude des Stroms I und / oder der Regelspannung ist dann ein Mass für die Viskosität η. Die so bestimmbare Viskosität η kann dann in einem weiteren Schritt zur Eichung der Strom I / Durchfluss Q Beziehung herangezogen werden.

In Fig. 1b weist der magnetische Probekörper 6 in der Bohrung 11 zusätzlich eine Blende 64 auf, mit welcher durch geeignete Wahl des Öffnungsquerschnitts der Blende 64 bei gegebenem Durchfluss Q ein Druckabfall über den Probekörper 6 vorgebbar ist. Selbstverständlich kann die Blende 64 auch an einer anderen Stelle in oder an der Bohrung 11 plaziert sein und der magnetische Probekörper 6 kann auch radial magnetisiert sein oder, wie später noch erläutert wird, in Richtung der Längsachse L axial entgegengesetzt magnetisiert sein und ferromagnetische Bereiche F zur Bündelung des magnetischen Flusses umfassen.

Selbstverständlich kann, wie in Fig. 1c dargestellt, die Messvorrichtung 1 auch zwei oder mehrere Elektromagnete 8 umfassen, bzw. kann der Elektromagnet 8 mehr als eine Spule, beispielsweise zwei Spulen 8a und 8b umfassen. Dabei kann der Wicklungsinn und / oder der Strom I durch die Spulen 8a und 8b gleich- oder entgegengesetzt, wie in Fig. 1 c dargestellt, gerichtet sein. Es versteht sich, dass alle in dieser Anmeldung beschriebenen Ausführungsbeispiele einer erfindungsgemässen Messvorrichtung 1 entsprechend mit mehreren Magnetspulen ausgestattet sein können.

In den Fig. 1d und Fig. 1e ist jeweils ein Ausführungsbeispiel eines in Richtung der Längsachse L axial entgegengesetzt magnetisierten Probekörpers 6 dargestellt. Dabei umfasst der Probekörper 6 zusätzlich einen feromagnetische Bereich F um den magnetischen Fluss zu bündeln beziehungsweise in eine gewünschte Richtung zu leiten.

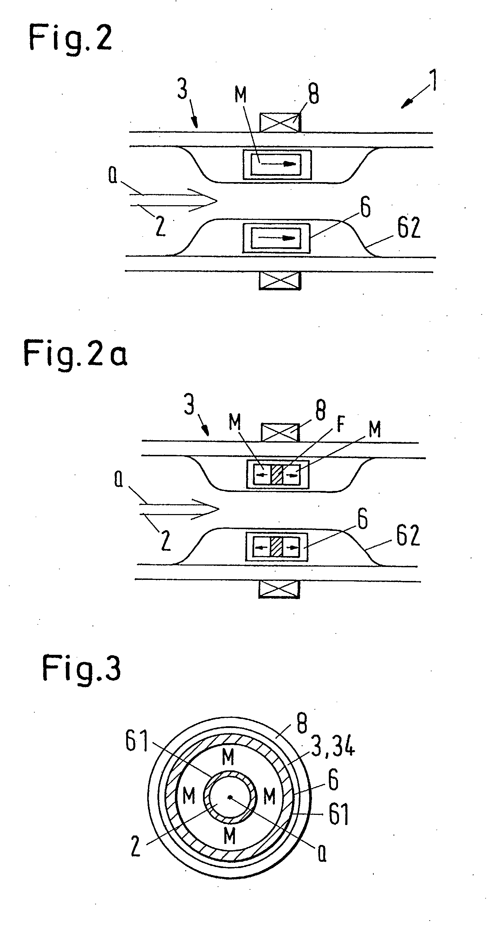

Da die erfingungsgemässe Messvorrichtung 1 insbesondere auch zur Durchflussmessung aggressiver Fluide 2 oder zur Durchflussmessung von hochreinen Fluiden 2 geeignet ist, ist es wie bereits erwähnt vorteilhaft, wenn der magnetische Probekörper 6 wie in Fig. 1 gezeigt eine Ummantelung 61 aufweist. Alternativ kann der magnetische Probekörper jedoch auch wie in Fig. 2 gezeigt, in einer bevorzugt aber nicht notwendigerweise flexiblen Schutzhülle 62 ageordnet sein, die den Probekörper 6 vom Fluid 2 isoliert, ohne dessen axiale Bewegungsfreiheit einzuschränken. Dabei kann die Schutzhülle 62, die auch als Sicke bezeichnet wird, auch dazu geeignet sein, die radiale Positionierung des Probekörpers 6 zu gewährleisten.

In Fig 2a ist ein zweites Ausführungsbeispiel gemäss Fig. 2 dargestellt, bei welchem der Probekörper 6 axial entgegengesetzt magnetisiert ist und zur Umleitung des magnetischen Flusses einen ferromagnetischen Bereich F umfasst. Selbstverständlich kann auch hier der ferromagnetische Bereich F fehlen oder der Probekörper 6 radial magnetisiert sein.

Fig.3 zeigt einen Schnitt A - A gemäss Fig. 1. Der Elektromagnet 8 umgibt den Hohlzylinder 3 in Form eines Kreisringes. Der scheiben- oder zylinderförmige Probekörper 6 umfasst eine Ummantelung 61, in welche der scheiben- oder ringförmige Permanentmagnet, der eine Magnetisierung M trägt, isoliert vom durchströmenden Fluid 2 eingebettet ist.

In Fig. 4 ist ein Ausführungsbeispiel eines magnetischen Probekörpers 6 dargestellt, der keine Bohrung 11 aufweist, durch die das Fluid 2 im Betriebszustand vom Zufluss 4 zum Abfluss 5 des Hohlkörpers 3 strömen kann. Vielmehr ist der Probekörper 6 derart ausgestaltet und im Hohlkörper 3 angeordnet, dass das Fluid 2 den Probekörper 6 umströmen kann. Dazu weist der Probekörper 6 an seinem äusseren Rand Ausnehmungen 110 auf, die einen Kanal für das Fluid 2 bilden, so dass das Fluid zwischen Probekörper 6 und Innenwand 33 des Hohlkörpers 3 vom Zufluss 4 zum Abfluss 5 strömen kann.

In Fig 4a ist ein zweites Ausführungsbeispiel gemäss Fig. 4 dargestellt, bei welchem der Probekörper 6 axial entgegengesetzt magnetisiert ist und zur Umleitung des magnetischen Flusses einen ferromagnetischen Bereich F umfasst. Selbstverständlich kann auch hier der ferromagnetische Bereich F fehlen oder der Probekörper 6 radial magnetisiert sein.

Fig. 5 zeigt gemäss Fig. 4 und Fig. 4a einen Schnitt durch den Hohlkörper 3 mit Probekörper 6 entlang der Schnittlinie B - B. Dabei ist der Probekörper 6 bevorzugt mit einer Ummantelung 61 umgeben, welche Ummantelung 61 die Ausnehmungen 110 umfasst. Zwischen je zwei Ausnehmungen 110 sind Stege 63 angeordnet, die so ausgestaltet und angeordnet sind, dass der Probekörper 6 in axialer Richtung durch die Stege 63 beweglich geführt ist und seine Lage in radialer Richtung stabilisiert wird.

Selbstverständlich ist es auch möglich, dass, wie in Fig. 6 am Beispiel eines Hohlkörpers 3 im Schnitt dargestellt, der Hohlkörper 3 einen oder mehrere Leitkanäle 111 aufweist, durch die das Fluid 2 am Probekörper 6 vorbei vom Zufluss 4 zum Abfluss 5 strömen kann. Der Probekörper 6 ist dann bevorzugt in Form eines Zylinders oder in Form einer Scheibe mit Ummantelung 61 ausgeführt, wobei der Probekörper 6 so ausgestaltet und angeordnet ist, dass er in axialer Richtung frei geführt und seine Lage in radialer Richtung stabilisiert wird.

In bestimmten Fällen, wenn beispielsweise strömungstechnische Vorgaben es erfordern, kann selbstverständlich auch jede Kombination der zuvor genannten Ausführungsformen realisiert sein, um dem Fluid 2 das Durchströmen und / oder das Vorbeiströmen am Probekörper 6 zu ermöglichen. Grundsätzlich kann sowohl der Querschnitt des Hohlkörpers 3 als auch die Form des Probekörpers 6 beliebig ausgestaltet sein, wenn die axiale Bewegungsfreiheit des Probekörpers 6 im Magnetfeld des Elektromagneten 8 gewährleistet ist.

So kann der Probekörper 6, wie in den Fig. 7 bis Fig. 9a dargestellt, zum Beispiel zigarrenförmig derart ausgestaltet sein, dass ihm noch eine gewisse radiale Bewegungsfreiheit zur Verfügung steht. Das kann beispielsweise von Vorteil sein, wenn der Hohlkörper 3 von einem Fluid 2 durchströmt wird, das in engen Zwischenräumen leicht zum verklumpen neigt oder beispielsweise bei mechanisch aggressiven Polierflüssigkeiten, die in engen Zwischenräumen beim Durchströmen zu entsprechenden Schäden führen können. Insbesondere biologische Flüssigkeiten, wie zum Beispiel Blut, können dazu neigen an umströmten Flächen eigene Oberflächen von einer gewissen Dicke zu bilden, wofür entsprechend Raum zur Verfügung stehen muss. Wenn der Probekörper 6 noch eine gewisse radiale Bewegungsfreiheit aufweist, kann die Messvorrichtung 1, wie in den Fig. 7 bis Fig. 8a beispielhaft dargestellt, Befestigungsmittel 12 zur Stabilisierung, insbesondere der radialen Lage des Probekörpers 6 umfassen. So ist der Probekörper 6 in den Fig. 7 und Fig. 7a mit geeigneten Fäden 12 an der Innenwand 33 des Hohlkörpers 3 derart fixiert, dass seine Lage in radialer Richtung im wesentlichen stabil ist, während der Probekörper 6 in axialer Richtung noch die notwendige Bewegungsfreiheit hat.

Bei dem Ausführungsbeispiel der Fig. 8 und Fig. 8a ist der Probekörper 6 an Biegebalken 12 aufgehängt, die den Probekörper 6 in einer im wesentlichen stabilen radialen Lage halten und eine hohe transversale Flexibilität aufweisen und dadurch eine genügend hohe axiale Beweglichkeit des Probekörpers 6 gewährleisten.

Selbstverständlich sind auch andere Befestigungsmittel 12 als mechanische Befestigungsmittel 12 möglich. Beispielsweise kann der Probekörper 6, wie exemplarisch in den Fig. 9 und Fig. 9a dargestellt, auch durch magnetisch wirkende Befestigungsmittel 12 radial stabilisiert werden. Dazu kann der Hohlkörper 3 einen oder mehrere Befestigungsmagnete 12 aufweisen, die zum Beispiel wie in Fig. 9 und Fig.9a dargestellt, als Magnetringe 12 den Hohlkörper 3 geeignet umfassen. Selbstverständlich ist es auch möglich, dass der Hohlkörper 3 beispielsweise aus einem ferromagnetischen Material F aufgebaut ist und der Probekörper 6 zusätzliche Magnete als Befestigungsmittel 12 aufweist, die die Lage des Probekörpers 6 radial stabilisieren. Dabei sind die als Befestigungsmittel 12 wirkenden Magnete 12, wie in den Fig. 9 und Fig. 9a exemplarisch dargestellt, bevorzugt als radial oder axial magnetisierte Ringmagnete ausgestaltet, wobei die Magnete 12 jedoch selbstverständlich auch jede andere geeignete geometrische Form aufweisen können.

Darüber hinaus kann der Hohlkörper 3 wie in Fig. 9 und Fig. 9a dargestellt, eventuell noch ein oder mehrere axiale Begrenzungselemente 16 aufweisen, die die axiale Auslenkbarkeit des Probekörpers 3 begrenzen. Dies ist bei der passiven magnetischen Lagerung wie in Fig. 9 und Fig. 9a gezeigt von besonderem Vorteil, da die passive magnetische Lagerung axial im wesentlichen instabil ist und erst im Betriebszustand durch den Elektromagneten 8 eine axiale Stabilisierung erreicht werden kann. Das kann auch dann sinnvoll sein, wenn der Durchfluss Q des Fluids 2 durch den Hohlkörper 3 starken kurzzeitigen Druckschwankungen unterworfen ist. Selbstverständlich ist das Vorhandensein von radialen Begrenzungselementen 16 nicht auf Ausführungsformen beschränkt, bei welchen der Probekörper 3 durch magnetisch wirkende Befestigungsmittel 12 radial stabilisiert wird. Die radialen Begrenzungselemente 16 können natürlich auch bei anderen Ausführungsvarianten der erfindungsgemässen Messvorrichtung 1 vorhanden sein.

Insbesondere wenn ein relativ grosser Durchfluss Q des Fluids 2 durch den Hohlkörper 3 realisiert werden muss, kann der Hohlkörper 3 eine separate Überströmleitung 13 für das Fluid 2 umfassen, die den Zufluss 4 des Hohlkörper 3 mit dem Abfluss 5 des Hohlkörpers 3 verbindet.

Die Fig. 10 und Fig. 10a zeigen exemplarisch je ein Ausführungsbeispiel einer Messvorrichtung 1 mit Überströmleitung 13. Die Überströmleitung 13, die den Zufluss 4 mit dem Abfluss 5 des Hohlkörpers 3 verbindet, weist dabei eine Verengung 131 auf, an welcher Verengung 131 das Fluid 2 in an sich bekannter Weise eine Druckdifferenz hervorruft, mit der der Probekörper 6 beaufschlagt wird. Da das Fluid 2 in dieser Anordnung vom Zufluss 4 zum Abfluss 5 des Hohlkörpers 3 durch die Überströmleitung 13 strömen kann, kann der Probekörper 6 derart ausgestaltet sein und mit der Innenfläche 33 des Hohlkörpers 3 formschlüssig zusammenwirken, dass der Probekörper 6 im Hohlkörper 3 axial beweglich ist und das Fluid 2 den Hohlkörper 3 weder umströmen noch durchströmen kann. Selbstverständlich kann jedoch auch bei dieser Ausführungsvariante der Probekörper 6 so ausgestaltet und angeordnet sein, dass, wie oben beschrieben, das Fluid 2 den Probekörper 6 durch Ausnehmungen 110 umströmen und / oder Leitkanäle 111 und / oder durch eine Bohrung 11 durchströmen kann.

Erfindungsgemäss umfasst die Messvorrichtung 1 auch bei dem Ausführungsbeipiel der Fig. 10 und 10a eine nicht gezeigte Ansteuereinrichtung 9 für den Elektromagneten 8, welche mit mindestens einem Positionssensor 7 zur Bestimmung der Position X des Probekörpers 6 signalverbunden ist, wobei die Ansteuereinrichtung 9 Regelmittel 10 umfasst, welche mit Hilfe eines Signals des Positionssensors 7 den Elektromagneten 8 derart ansteuern, dass der magnetische Probekörper 6 gegen den Arbeitsdruck in einer vorgebbaren Position X, vorzugsweise in der Nullage gehalten wird.

Dabei ist der Positionssensor 7 bevorzugt aussen am Hohlkörper 3, wie beispielsweise in Fig. 1, Fig. 4 und Fig. 10 exemplarisch dargestellt, oder in der Wand 34 des Hohlkörpers 3 so angeordnet ist, dass der Positionssensor 7 eine Position X und / oder eine Änderung der Position X des Probekörpers 6 detektieren kann. Selbstverständlich kann der Positionssensor 7 auch innerhalb des Hohlkörpers 3 geeignet angeordnet sein.

Als Positionssensor 7 kommen verschiedene Typen von Sensoren in Frage. Bevorzugt umfasst der Positionssensor 7 einen Magnetfeldsensor 71, insbesondere eine Hallsonde 72, einen Differentialfeldsensor 73, zum Beispiel auf Basis eines GMR-Sensor 74 (Giant Magnetoresistive Sensor), insbesondere eine GMR-Sensor-Brücke, oder ein LVDT 75 (Linear Variable Differential Transformer), oder einen Wirbelstromsensor 76. Selbstverständlich ist es auch möglich, die Position X des Probekörpers 6 auf andere Weise, z.B. mittels Lichtschranke mit optischen Mittel oder anders zu bestimmen.

Bevorzugt kommen jeweils mindestens zwei Positionssensoren 7 zur Bestimmung der Position des magnetischen Probekörpers 6 zum Einsatz, die in Anordnung einer Brückenschaltung mit der Ansteuereinrichtung 9 verbunden sind und im Falle einer Auslenkung des Probekörpers 6 aus seiner Nullage ein Differenzsignal an die Ansteuereinheit 9 liefern, dessen Stärke und Vorzeichen abhängig von der Grösse und Richtung der Auslenkung des Probekörpers 6 ist. Dabei können die Positionssensoren 7, wie in Fig 1 dargestellt, auf einer Linie parallel zur Längsachse L des Hohlkörpers 3, darstellungsgemäss jeweils rechts und links vom Elektromagneten 8 angeordnet sein, oder es können natürlich auch beide Positionssensoren 7 gemeinsam darstellungsgemäss rechts oder links auf einer Linie parallel zur Längsachse L des Hohlkörpers 3 auf derselben Seite des Elektromagneten 8 angeordnet sein. Insbesondere können auch, wie in Fig. 11 und Fig. 11a dargestellt, mindestens vier Positionssensoren 7 derart gegenüberliegend am Hohlkörper 3 angeordnet sein, dass die Stärke des Differenzsignals nur von der axialen Verschiebung des Probekörpers 6 abhängt, wogegen eine radiale Verschiebung nicht detektiert wird. Dabei kann die erfindungsgemässe Messvorrichtung 1 selbstverständlich auch nur einen Positionssensor 7 umfassen.

Darüber hinaus kann der Probekörper 6 wie in den Fig. 12 bis 14a dargestellt, einen oder mehrere Positionsgeber 14 aufweisen, die zur Bestimmung der Position X des Probekörpers 6 mit dem Positionssensor 7 zusammenwirken. Durch die Verwendung von Positionsgebern 14 im Probekörper 6 kann die Empfindlichkeit der Messvorrichtung erhöht und unter Umständen eine weitgehende Entkopplung des Positionssensors 7 von der Magnetisierung M des magnetischen Probekörper 6 erreicht werden. Je nach Art des verwendeten Positionssensors 7 kann der Positionsgeber 14 permanentmagnetische, ferromagnetische, elektrisch leitende, optische oder andere Komponenten umfassen.

Bei dem in Fig. 12 dargestellten Ausführungsbeispiel umfasst der Positionssensor 7 einen Magnetfeldsensor 71, der beispielsweise aus zwei Hallsonden 72 aufgebaut sein kann, die über eine Brückenschaltung den Regelmitteln 10 der Ansteuereinrichtung 9 ein entsprechendes Differenzsignal zuführen, so dass der Elektromagnet 8 entsprechend angesteuert werden kann. Selbstverständlich kann der Magnetfeldsensor 71 auch nur eine Hallsonde 72 aufweisen. Dabei kann der Magnetfeldsensor 71 eine Abschirmung 710 aufweisen, die den Magnetfeldsensor 71 gegen äussere Magnetfelder, insbesondere gegen den Elektromagneten 8 abschirmt. Der Magnetfeldsensor 71 wirkt mit dem Positionsgeber 14 zusammen, der ein magnetisches Material, insbesondere ein permanentmagnetisches Material umfasst.

Bei dem in den Fig. 13 und Fig. 13a dargestellten Ausführungsbeispiel umfasst der Positionssensor 7 einen Differentialfeldsensor 73, der einen GMR-Sensor 74 (Giant Magnetoresistive Sensor) oder ein LVDT 75 (Linear Variable Differential Transformer) umfassen kann, wobei der Differentialfeldsensor den Regelmitteln 10 der Ansteuereinrichtung 9 ein entsprechendes Differenzsignal zuführt, so dass der Elektromagnet 8 entsprechend angesteuert werden kann. Dabei kann der Differentialfeldsensor 73 eine Abschirmung 730 aufweisen, die den Differentialfeldsensor 73 gegen äussere Magnetfelder, insbesondere gegen den Elektromagneten 8 abschirmt. Der Differentialfeldsensor 73 wirkt mit dem Positionsgeber 14 zusammen, der ein ferromagnetisches Material F, wie beispielsweise Eisen, ein anderes ferromagnetisches Material F oder ein permanentmagnetisches Material umfasst.

Die Fig. 14 und Fig. 14a zeigen je ein Ausführungsbeispiel einer erfindungsgemässen Messvorrichtung 1, die als Positionssensor 7 mit mindestens einem Wirbelstromsensor 76 ausgestattet ist. Bevorzugt, jedoch nicht zwingend, sind zwei Wirbelstromsensoren 76 vorhanden, die in einer Brückenschaltung den Regelmitteln 10 der Ansteuereinrichtung 9 ein entsprechendes Differenzsignal zuführen, so dass der Elektromagnet 8 entsprechend angesteuert werden kann. Der Wirbelstromsensor 76 wirkt mit dem Positionsgeber 14 zusammen, der bevorzugt ein metallisches Material als Sensortarget umfasst.

Wie bereits erwähnt, kann die erfindungsgemässe Messvorrichtung 1 auch so ausgestaltet sein und betrieben werden, dass durch geeignete Positionierung des Probekörpers 6 im Hohlkörper 3 der Durchfluss Q durch den Hohlkörper 3 gesteuert und / oder geregelt werden kann.

Die Fig. 15 und Fig. 15a zeigen je eine Ausführungsform der erfindungsgemässen Messvorrichtung 1, bei welcher der Strömungsquerschnitt 31 des Hohlkörpers 3 entlang der Längsachse L und die Querschnittsfläche des Probekörpers 6 entlang der Körperachse K nach einem vorgebbaren Schema, beispielsweise konisch, variiert. In der in Fig. 15 bzw. Fig. 15a dargestellten bevorzugten Ausführungsvariante erweitert sich der Strömungsquerschnitt 31 des Hohlkörpers 3 ausgehend vom Zufluss 4 in Richtung zum Abfluss 5 konisch von einem ersten Strömungsquerschnitt 311 auf einen zweiten Strömungsquerschnitt 312. Entsprechend erweitert sich die dem Zufluss 4 des Hohlkörpers 3 zugewandte Seite des Probekörpers 6 von einem kleineren Durchmesser einer Querschnittsfläche des Probekörpers 6 auf einen grösseren Durchmesser einer Querschnittsfläche des Probekörpers 6, so dass der Probekörper 6 mit einer Innenfläche 33 des Hohlkörpers 3 derart zusammenwirkt, dass der Durchfluss Q vom Abstand des Probekörpers 6 zum Zufluss 4 bzw. zum Abfluss 5 abhängt. Insbesondere ist der Probekörper 6 so ausgestaltet, dass der Probekörper 6 mit der Innenfläche 33 des Hohlkörper 3 derart zusammenwirkt, dass durch geeignete Positionierung des Probekörpers 6 der Durchfluss Q des Fluids 2 durch den Hohlkörper 3 vollständig unterbunden werden kann. Bevorzugt weist der Probekörper 6 eine Ausnehmung 110 und / oder der Hohlkörper 3 einen Leitkanal 111 auf, die einen Kanal für das Fluid 2 bilden, so dass in Abhängigkeit von der Position X des Probekörpers 6 im Hohlkörper 3 das Fluid 2 zwischen Probekörper 6 und der Innenfläche 33 des Hohlkörpers 3 vom Zufluss 4 zum Abfluss 5 strömen kann oder nicht. Zur Erfüllung der gleichen Funktion kann der Probekörper 6 selbstverständlich auch, in Fig. 15 nicht gezeigte, eine oder mehrere Bohrungen 11 gemäss Fig. 1 aufweisen. Mit dieser Ausführungsvarainte der erfindungsgemässen Messvorrichtung 1 kann einerseits wie oben beschrieben der Durchfluss Q des Fluids 2 durch den Hohlkörper 3 bestimmt werden; andererseits kann der Durchfluss Q des Fluids 2 auch gesteuert und / oder geregelt werden, indem auf den magnetischen Probekörper 6 durch den Elektromagneten 8 derart eine Kraft ausgeübt wird, dass der Probekörper 6 in eine vorgebbare Position X gebracht und dort gehalten wird.

In Fig. 15b ist ein weiteres Ausführungsbeispiel einer Messvorrichtung 1 dargestellt, die eine Veränderung des Durchlflusses Q des Fluids 2 ermöglicht. Der magnetische Probekörper 6 weist eine Blende 64 auf, die mit einem Flussbegrenzer 65 derart zusammenwirkt, dass der Durchfluss Q durch eine Änderung der Position X des Probekörpers 6, d.h. durch eine Änderung des Abstands der Blende 64 vom Flussbegrenzer 65, geregelt werden kann. Der Flussbegrenzer 65 ist dabei so ausgestaltet und im Hohlkörper 3 angeordnet, dass das Fluid 2 den Flussbegrenzer 65 durchströmen und / oder umströmen kann, sofern die Position X des Probekörpers 6 einen Durchfluss Q des Fluids 2 durch den Hohlkörper 3 gestattet. Dabei ist es mit den Messvorrichtungen 1, die in den Fig. 15 bis Fig. 15b schematisch dargestellt sind, insbesondere auch möglich, die Auflösung der Messvorrichtung 1 für spezielle Anforderungen zu optimieren bzw. an spezielle Messbereiche für den Durchfluss Q anzupassen. So kann beispielsweise durch Einstellung eines festen Wertes des elektrischen Stroms I, der den Elektromagneten 8 speist, der Druckabfall über den Probekörper 6 konstant gehalten werden, so dass aus der Position X des Probekörpers 6 der Durchfluss Q des Fluids 2 ermittelt werden kann. Dabei kann je nach Anforderung die Position X der Nullage durch die Ansteuereinrichtung 9 für jede Messung individuell angepasst werden. Das heisst, durch geeignete Wahl der Nullage kann ein und dieselbe Messeinrichtung für verschiedene Messbereiche des Durchflusses Q konfiguriert werden und sogar während des Betriebes der Messbereich angepasst werden. Insbesondere kann durch geeignete Wahl der Position X des Probekörpers 6 eine Viskositätsabhängigkeit der Durchflussmessung im wesentlichen eliminiert, zumindest stark reduziert werden.

In dem in den Fig. 16 und Fig. 16a dargestellten bevorzugten Ausführungsbeispiel umfasst die die Ansteuervorrichtung 9 neben den Regelmitteln 10 einen in einem äusseren Regelkreis angeordneten Ventilregler V, der einen vorgebbaren Soll-Wert $Q_s$ für den Durchfluss Q des Fluids 2 durch den Hohlkörper 3 mit einem aus der Regelgrösse, beispielsweise aus der Grösse des elektrischen Stroms I durch den Elektromagneten 8, bestimmten Ist-Wert $Q_l$ vergleicht. Der Ventilregler V ist ebenso wie die Positionssensoren 7 mit den Regelmitteln 10, die bevorzugt einen PI-Regler, einen PID-Regler oder einen Zustandsregler umfassen, signalverbunden. Die Regelmittel 10 steuern dabei den Elektromagneten 8 derart an, dass der vorgegebene Sollwert $Q_s$ des Durchflusses Q des Fluids 2 eingeregelt wird. Zur Bestimmung des Ist-Wertes $Q_l$ des aktuellen Durchflusses Q des Fluids 2 durch den Hohlkörper 3 wird bevorzugt eine Look-Up-Table LT herangezogen, die durch ein zwei- oder mehrdimensionales Datenfeld, wie in Fig. 17 schematisch dargestellt, repräsentiert werden kann, das unter Berücksichtung verschiedener Parameter wie beispielsweise der Position X des Probekörpers 6 im Hohlkörper 3, der Temperatur T oder dem Druck P des Fluids 2 und / oder verschiedener Kenngrössen des Fluids 2 wie der Dichte p, der Viskosität η oder anderer Kenngrössen, einem Wert der Regelgrösse, also dem Strom I einen Ist-Wert $Q_l$ des Durchflusses Q des Fluids 2 durch den Hohlkörper 3 zuordnet, der dann gemeinsam mit dem vorgegeben Soll-Wert $Q_s$ für den Durchfluss Q des Fluids 2 dem Ventilregler V zugeführt wird.

Die erfindungsgemässe Messvorrichtung 1 kann somit in einer der bisher beschriebenen Ausführungsformen, insbesondere in der Ausführungsform gemäss Fig. 16 und Fig. 16a, auch zur Bestimmung einer Kenngrösse des Fluids 2, insbesondere der Viskosität η und / oder der Dichte p und oder anderer Kenngrössen und / oder Parameter des Fluids 2 verwendet werden. Bevorzugt wird dazu der Probekörper 6 bei konstantem Durchfluss Q durch die Magnetkraft des Elektromagneten 8 an einer vorgebbaren Position X, beispielsweise in der Nullage oder an einer anderen Position X gehalten. Wenn sich bei konstantem Durchfluss Q des Fluids 2 in Abhängigkeit von der Zeit eine Kenngrösse des Fluids, beispielsweise die Viskosität η, die Dichte p oder eine andere Kenngrösse ändert, muss im allgemeinen der Wert des elektrischen Stromes I, der durch den Elektromagneten 8 fliesst, entsprechend angepasst werden, wenn der Probekörper 6 die vorgegebene Position X im Hohlkörper 3 beibehalten soll. Analog dem zuvor beschriebenen Verfahren kann dann unter Verwendung einer entsprechenden Look-Up-Table LT bei gegebenem Durchfluss Q aus dem Wert und / oder der Änderung des elektrischen Stromes 1 durch den Elektromagneten 8 die entsprechende Kenngrösse und / oder deren Veränderung bestimmt werden.

Da die Genauigkeit der Bestimmung einer Kenngrösse, eines Parameters oder des Durchflusses Q des Fluids 2, unter anderem auch vom Durchfluss Q des Fluids 2 selbst abhängig ist, steht mit dem zuvor beschriebenen Ausführungsbeispiel eine Messvorrichtung 1 mit einstellbarer Messgenauigkeit zur Verfügung. So kann beispielsweise die Messgenauigkeit der Messvorrichtung 1 verändert werden, indem der Probekörper 6 an einer anderen vorgebbaren Position X gehalten wird, die einem anderen Durchfluss Q des Fluids 2 entspricht.

In Fig. 16b ist schematisch eine Messvorrichtung 1 mit Ansteuereinrichtung 9 dargestellt, welche dazu geeignet ist, in Abhängigkeit vom Durchfluss Q des Fluids 2 den Elektromagneten 8 derart anzusteuern, dass der Probekörper 6 an einer vorgebbaren Position X gehalten wird. Dazu umfasst die Ansteuereinrichtung 9 eine Positionstabelle PT, mit deren Hilfe aus einem gemessenen Durchfluss Q des Fluids 2 durch den Hohlkörper 3 ein Signal generiert werden kann, so dass der Probekörper 6 an einer vorgebbaren Position X positioniert werden kann.

Fig. 17 zeigt schliesslich in schematischer Darstellung eine Look-Up-Table LT, welche es gestattet, den Durchfluss Q des Fluids 2 als Funktion des Stroms I durch den Elektromagneten 8 und der Position X des Probekörpers 6 zu bestimmen. Selbstverständlich gestattet es eine derartige Look-Up-Table LT unter Umständen auch bestimmte Parameter des Fluids 2, wie beispielsweise die Dichte ρ, die Viskosität η, den Druck P, die Temperatur T unter Zuhilfenahme geeigneter Daten zu berücksichtigen oder umgekehrt zu ermitteln.

Mit der erfindungsgemässen Messvorrichtung wird somit eine besonders einfach aufgebaute Vorrichtung zur Bestimmung des Durchflusses eines Fluids durch einen Hohlkörper vorgeschlagen. Der Durchfluss des Fluids kann beispielsweise auf einfache Weise unter Zuhilfenahme einer Look-UP-Table direkt aus dem elektrischen Strom ermittelt werden, der einem Elektromagneten zugeführt werden muss, um einen im Hohlkörper, d.h. im durchströmenden Fluid angeordneten Probekörper an einer vorgebbaren Position, bevorzugt in einer stabilen Nullage, zu halten. Insbesondere ist zur Stabilisierung des Probekörpers in der stabilen Nullage, also in derjenigen Position, die der Probekörper ohne Durchfluss des Fluids einnimmt, in einer bevorzugten Ausführungsvariante keine zusätzliche Kraft notwendig. Dadurch, dass der Probekörper direkt im durchströmenden Fluid angeordnet ist, sind ausserhalb des Hohlkörpers keine zusätzlichen Einrichtungen notwendigen, um die vom Fluid aufgebaute Druckdifferenz zu detektieren. Dadurch ist der Aufbau der erfindungsgemässen Messvorrichtung im Vergleich zum Stand der Technik wesentlich vereinfacht. Im Betriebszustand findet bevorzugt keine wesentliche Verschiebung des Probekörpers in Bezug auf den Hohlkörper statt, was insbesondere die beschrieben Vorteile zur Folge hat. Darüberhinaus ist die vorgeschlagene Messvorrichtung sehr flexibel einsetzbar, insbesondere eignet sie sich auch zur Regelung des Durchflusses und zur Bestimmung verschiedener Parameter bzw. Kenngrössen des Fluids und kann auf verschiedene Messbereiche des Durchflusses optimiert werden.

**Patentansprüche**

1. Messvorrichtung zur Bestimmung des Durchflusses (Q) eines Fluids (2), umfassend einen Hohlkörper (3), der einen Zufluss (4) und einen Abfluss (5) für das Fluid (2) aufweist, und in welchem Hohlkörper (3) ein magnetischer Probekörper (6) beweglich angeordnet ist, der vom Fluid (2) mit einem Arbeitsdruck beaufschlagbar ist, mindestens einen Positionssensor (7) zur Bestimmung der Position des magnetischen Probekörpers (6), einen Elektromagneten (8) zum Ausüben einer Magnetkraft auf den magnetischen Probekörper (6), sowie eine Ansteuereinrichtung (9) für den Elektromagneten (8), welche mit dem Positionssensor (7) signalverbunden ist, wobei die Ansteuereinrichtung (9) Regelmittel (10) umfasst, welche mit Hilfe eines Signals des Positionssensors (7) den Elektromagneten (8) derart ansteuern, dass der magnetische Probekörper (6) gegen den Arbeitsdruck in einer Position (X) gehalten wird, **dadurch gekennzeichnet, dass** der magnetische Probekörper (6) so ausgestaltet und angeordnet ist, dass das Fluid (2) durch den Hohlkörper (3) vom Zufluss (4) zum Abfluss (5) strömen kann.

2. Messvorrichtung nach Anspruch 1, bei welcher der Hohlkörper (3) in einer vorgebbaren Position (X) gehalten wird.

3. Messvorrichtung nach Anspruch 1 oder 2, bei welcher der Probekörper (6) in axialer Richtung, insbesondere auch entgegengesetzt axial, magnetisiert ist.

4. Messvorrichtung nach einem der vorangehenden Ansprüche, bei welcher der Probekörper (6) in radialer Richtung magnetisiert ist.

5. Messvorrichtung nach einem der vorangehenden Ansprüche, bei welcher der Hohlkörper (3) einen kreisförmigen Strömungsquerschnitt aufweist.

6. Messvorrichtung nach einem der vorangehenden Ansprüche, bei welcher der Strömungsquerschnitt des Hohlkörpers (3) entlang einer Längsachse (L) nach einem vorgebbaren Schema variiert.

7. Messvorrichtung nach einem der vorangehenden Ansprüche, bei welcher der magnetische Probekörper (6) ringförmig oder scheibenförmig, insbesondere in Form einer Kreisscheibe, ausgestaltet ist.

8. Messvorrichtung nach einem der vorangehenden Ansprüche, bei welcher eine Querschnittsfläche des magnetischen Probekörpers (6) entlang einer Körperachse (K) nach einem vorgebbaren Schema variiert.

9. Messvorrichtung nach einem der vorangehenden Ansprüche, wobei der magnetische Probekörper (6) mindestens eine Bohrung (11) aufweist, die im Betriebszustand vom Fluid (2) durchströmt wird.

10. Messvorrichtung nach einem der vorangehenden Ansprüche, die Befestigungsmittel (12) zur Stabilisierung der Lage des magnetischen Probekörpers (6), insbesondere der radialen Lage umfasst.

**11.** Messvorrichtung nach einem der vorangehenden Ansprüche, bei welcher eine separate Überströmleitung (13) für das Fluid (2) den Zufluss (4) des Hohlkörpers (3) mit dem Abfluss (5) des Hohlkörpers (3) verbindet.

**12.** Messvorrichtung nach einem der vorangehenden Ansprüche, bei welcher der magnetische Probekörper (6) eine Ummantelung aufweist.

**13.** Messvorrichtung nach einem der vorangehenden Ansprüche, bei welchem der magnetische Probekörper (6) einen Positionsgeber (14) zum Zusammenwirken mit dem Positionssensor (7) aufweist.

**14.** Messvorrichtung nach einem der vorangehenden Ansprüche, bei welcher die Regelmittel (10) einen elektronischen Regler umfassen, der als PI-Regler, als PID-Regler oder als Zustandsregler ausgestaltet ist.

**15.** Messvorrichtung nach einem der vorangehenden Ansprüche, mit einer Auswerteeinheit (15), welche mit Hilfe der für die Erregung des Elektromagneten (8) notwendigen elektrischen Energie, insbesondere des elektrischen Stroms (I), den Durchfluss (Q) des Fluids (2) durch den Hohlkörper (3) ermittelt.

**16.** Verfahren zur Bestimmung des Durchflusses (Q) eines Fluids (2) mittels einer Messvorrichtung, welche umfasst:

- einen Hohlkörper (3), der einen Zufluss (4) und einen Abfluss (5) für das Fluid (2) aufweist, in welchem Hohlkörper (3) ein magnetischer Probekörper (6) beweglich angeordnet ist,

- einem Elektromagneten (8) zum Ausüben einer Magnetkraft auf den magnetischen Probekörper (6),

- sowie eine Ansteuereinheit (9) für den Elektromagneten (8), die mit mindestens einem Positionssensor (7) zur Bestimmung der Position (X) des magnetischen Probekörpers (6) signalverbunden ist,

bei welchem Verfahren das Fluid (2) den Hohlkörper (3) vom Zufluss (4) zum Abfluss (5) durchströmt, so dass der magnetische Probekörper (6) mit einem Arbeitsdruck beaufschlagt wird, und mit Hilfe eines Signals des Positionssensors (7) der Elektromagnet (8) derart angesteuert wird, dass der magnetische Probekörper (6) gegen den Arbeitsdruck in einer Position (X) gehalten wird.

**17.** Verfahren nach Anspruch 16, bei welchem der Elektromagnet (8) derart angesteuert wird, dass der magnetische Probekörper (6) unabhängig vom Durchfluss (Q) des Fluids (2) mit einem konstanten Arbeitsdruck beaufschlagt wird.

**18.** Verfahren nach Anspruch 16, bei welchem der Elektromagnet (8) derart angesteuert wird, dass der magnetische Probekörper (6) in Abhängigkeit vom Durchfluss (Q) des Fluids (2) mit einem konstanten Arbeitsdruck beaufschlagt wird.

**19.** Verfahren nach einem der Ansprüche 16 bis 18, bei welchem der Durchfluss (Q) aus der Position (X) des Probekörpers (6) und / oder dem Strom (I) durch den Elektromagneten (8) bestimmt wird.

**20.** Verfahren nach einem der Ansprüche 16 bis 19, bei welchem der magnetische Probekörper (6) mit Hilfe des Elektromagneten (8) um die axiale Position (X) oszilliert wird, so dass die Viskosität ($\eta$) bestimmbar ist.

**21.** Verwendung einer Messvorrichtung gemäss einem der Ansprüche 1 bis 15 zur Bestimmung einer Kenngrösse des Fluids (2), insbesondere der Viskosität ($\eta$) und / oder der Dichte ($\rho$) des Fluids (2).

**22.** Verwendung einer Messvorrichtung gemäss einem der Ansprüche 1 bis 15 als Ventil und / oder als Durchflussregelsystem für ein Fluid (2).

Fig.1

Fig.1a

## Fig.1b

## Fig.1c

**Fig.1d**

**Fig.1e**

## Fig.2

## Fig.2a

## Fig.3

Fig.4

Fig.4a

Fig.5

Fig.6

Fig.7

## Fig.7a

## Fig.8

## Fig.8a

## Fig.9

## Fig.9a

## Fig.10

## Fig.10a

## Fig.11

## Fig.11a

# Fig.12

# Fig.12a

## Fig.13

## Fig.13a

## Fig.14

## Fig.14a

# Fig.15

# Fig.15a

## Fig.15b

## Fig.16

## Fig.16a

## Fig.16b

# Fig.17